# EUROPEAN PATENT APPLICATION

(11) **EP 1 416 041 A1**
(43) Date of publication of application: **06.05.2004**
(21) Application number: 02743841.5
(22) Date of filing: 05.07.2002
(51) Int. Cl.: C12M 1/00, C12N 15/09, C12Q 1/68, B01J 19/00, G01N 33/50

(54) **REACTION CONTAINER AND REACTION DEVICE**

(30) Priority: 06.07.2001 JP 2001207143; 17.06.2002 JP 2002006021
(71) Applicant: PRECISION SYSTEM SCIENCE CO., LTD., Matsudo-shi, Chiba, 271-0064 (JP)
(72) Inventor: TAJIMA, H., c/o Precision System Science Co., Ltd., Matsudo-shi, Chiba 271-0064 (JP); ASANO, T., c/o Precision System Science Co., Ltd., Matsudo-shi, Chiba 271-0064 (JP)
(74) Representative: Bohnenberger, Johannes, Dr.
(86) International application number: PCT/JP2002/006852
(87) International publication number: WO 2003/004596

(57) **Abstract**

In order to attain an object to provide a reaction vessel, reaction apparatus, and method with which a reaction can be automated without requiring centrifugation when a reaction solution is held in a reaction chamber, the temperature of the reaction solution held in the reaction chamber can be rapidly controlled, the reaction can proceed even when just a tiny amount of reaction solution is held in the reaction chamber, and the reaction occurring in the reaction chamber can be monitored in real time, temperature control of a reaction solution 4a held in a tightly closed space S1a is performed through a bottom plate 22a constituting a reaction vessel main body 2a and a pressing part 32a constituting a cover member 3a, and the irradiation of the reaction solution 4a with excitation light and the detection of fluorescent light emitted from the reaction solution 4a are performed through a first side plate 23a constituting the reaction vessel main body 2a.

## Description

### TECHNICAL FIELD

This invention relates to a reaction vessel, reaction apparatus, and method with which the temperature of a reaction solution can be rapidly controlled and the reaction can be monitored in real time.

### BACKGROUND ART

A polymerase chain reaction (hereafter referred to as "PCR") is a technique which amplifies target nucleic acids by raising and lowering the temperature of a heat-resistant polymerase and primers. This technique is widely used in fields such as genetic engineering and biological test methods and detection methods.

The principle behind PCR lies in the fact that target DNA is amplified in a geometrical progression by numerous iterations of a cycle according to a thermal profile (rise and fall of temperature) that is set in three stages: a first stage in which the temperature is maintained at a level at which double-stranded DNA containing a target DNA sequence dissociates into a single strand, a second stage in which the temperature is maintained at a level at which forward and reverse primers are annealed with the dissociated single-stranded DNA, and a third stage in which the temperature is maintained at a level at which a complementary DNA chain is synthesized with the single-stranded DNA by the DNA polymerase.

For example, a PCR can be conducted by reacting a reaction solution containing double-stranded DNA that includes a target DNA sequence, an excess amount of a pair of primers, and a heat-resistant polymerase for 30 to 40 cycles, with each cycle comprising 30 seconds at 95°C, 30 seconds at 65°C, and 1 minute at 72°C. At 95°C, the double-stranded DNA dissociates into single-stranded DNA. Next, the reaction solution is cooled to an appropriate temperature as dictated by the base sequences of the primers (65°C in the above example), whereupon the primers and the single-stranded DNA are annealed. The temperature is then raised to the reaction temperature of the polymerase (72°C in the above example), whereupon a DNA synthesis reaction proceeds under the influence of the polymerase.

Thus, controlling the temperature of the reaction solution is important in a PCR, so a PCR is usually conducted using a thermostat apparatus that allows programming of the temperature control, and a reaction vessel that can be used with such an apparatus.

The most common approach is to use an apparatus in which micro-tubes are snugly fitted in holes of a metal block equipped with a heating/cooling apparatus, and a cycle of heating (dissociation of the double-stranded DNA), cooling (annealing of the primers), and heating (chain extension reaction by the polymerase) is repeated for the reaction solution in the micro-tubes via the metal block. Two different systems are employed for cooling the metal block: using a compressor, and using a Peltier cooling system. Recently, apparatuses have also been available in which the micro-tubes are moved together in their rack, rather than using a metal block, and in which the micro-tubes are successively immersed in three liquid-phase or solid-phase incubators with independent temperatures, so that a cycle consisting of heating (dissociation of the double-stranded DNA), cooling (annealing of the primers), and heating (chain extension reaction by the polymerase) is repeated.

If a large number of specimens is involved, in order to process numerous specimens all at once, as when a PCR is conducted for the purpose of screening, apparatuses have been developed with which PCRs for 96 specimens can be conducted at the same time using a PCR micro-titer plate (96 wells).

In particular, there has been a growing need for the efficient processing of numerous specimens in parallel by automating a series of operations comprising the preparation of samples containing target nucleic acids (such as extraction of nucleic acids from cells), amplification of these target nucleic acids by PCR, and monitoring of the progress of the PCR (such as whether or not the target nucleic acids have been amplified, or the amount of PCR amplification product), in order to treat numerous specimens more efficiently in genetic diagnosis and the genome project. If this series of operation is to be automated and numerous specimens are to be efficiently processed in parallel, it is necessary first of all to minimize the time PCR takes, secondly to minimize the quantity of specimen required for a PCR, and thirdly to monitor the progress of the PCR in real time (that is, instantly during the course of the PCR).

However, with a conventional PCR reaction apparatus and PCR reaction vessel, since the object is to perform a PCR by means of typical temperature control in which a reaction is repeated for 30 to 40 cycles, with each cycle comprising 30 seconds at 95°C, 30 seconds at 65°C, and 1 minute at 72°C, it is difficult to achieve the goal of minimizing the time required for the PCR by using a conventional PCR reaction apparatus and PCR reaction vessel. For example, when a reaction is repeated for 30 to 40 cycles using a conventional PCR reaction apparatus and PCR reaction vessel with each cycle comprising 30 seconds at 95°C, 30 seconds at 65°C, and 1 minute at 72°C, it takes about 1 hour to complete the PCR.

Also, with a conventional PCR reaction apparatus and PCR reaction vessel, if the amount of specimen (reaction solution) is too small, the solvent (ordinarily water) in the reaction solution may evaporate during the PCR, bringing the reaction to a halt. The reasons for this include the following. Because of the large contact area between air and the reaction solution in the reaction chamber (such as a micro-tube or micro-titer plate well) in which the PCR proceeds, the solvent in the reaction solution is in an environment in which it is prone to evaporation, and since the temperature of the walls inside the reaction chamber is not uniform, some portions of the walls inside the reaction chamber are lower in temperature than the reaction solution (such as the upper part of a micro-tube or upper part of a micro-titer plate well), so the evaporated solvent ends up being liquefied in these areas. Accordingly, it is difficult to achieve the goal of minimizing the amount of reaction solution by using a conventional PCR reaction apparatus and PCR reaction vessel.

In light of this situation, an apparatus has been developed in which a small amount of reaction solution is enclosed inside a micro-capillary which has a large surface area and good thermal conductivity, and heating and cooling are performed by means of hot air from a halogen lamp or other such heat source and room-temperature cool air. For example, LightCycler (made by Roche Molecular Biochemicals) is marketed as an apparatus of this type. With this apparatus, temperature control of approximately 20°C/sec can be achieved by utilizing micro-capillaries that have a large surface area and a good thermal conductivity. Thus, each cycle takes only about 30 to 60 seconds, so 30 cycles can be completed in about 15 to 30 minutes. Also, since micro-capillaries are utilized, a PCR can be conducted using a very small amount of reaction solution, only about 5 to 20 µl. Furthermore, since one of the characteristics of a glass capillary is that it focuses nearly all the irradiation light at the tip of the capillary, fluorescent light emitted from a reaction solution according to the amount of PCR amplification product can be measured quickly and with good sensitivity, making it possible to monitor the progress of the PCR in real time.

Thus, a PCR reaction apparatus that makes use of a micro-capillary as a PCR reaction vessel reduces the time the PCR takes by means of rapid temperature control of the reaction solution, and reduces the amount of reaction solution required for the PCR to an extremely small amount. Furthermore, the progress of the PCR can be monitored in real time. Such a PCR reaction apparatus is therefore extremely useful when a PCR is conducted alone.

With this PCR reaction apparatus, however, the filling of the micro-capillaries with the reaction solution requires an operation in which the reaction solution is added to plastic containers disposed at the upper parts of glass capillaries, and sealed in with plastic stoppers, after which a centrifuge is used to move the reaction solution from the plastic containers into the glass capillaries, and the various capillaries are then removed from the centrifuge and placed in the reaction apparatus. Also, if air is admixed in the course of filling the micro-capillaries, this air will expand as a result of the heating performed in the process of the PCR, causing the reaction solution to move through the micro-capillaries and resulting in a drop in the amplification efficiency of the PCR. Consequently, great care must be exercised in the filling of the micro-capillaries with the reaction solution:

Therefore, it is difficult to utilize a PCR reaction apparatus in which micro-capillaries are used as the PCR reaction vessel for the automation of the series of operations comprising the preparation of samples containing target nucleic acids (such as extraction of nucleic acids from cells), the amplification of the target nucleic acids by PCR, and monitoring the progress of the PCR (such as whether or not the target nucleic acids have been amplified, or the amount of PCR amplification product).

Also, whichever PCR reaction apparatus and PCR reaction vessel are used, the reaction vessel main body holding the reaction solution must be covered with a lid and the inside of the reaction chamber (such as microtubes or the wells of a microtiter plate) in which the PCR proceeds must be sealed in order to prevent the reaction from coming to a halt when the solvent (usually water) in the reaction solution evaporates in the middle of the PCR. Therefore, with a conventional PCR reaction apparatus and PCR reaction vessel, accessing the amplified fragments obtained by PCR first requires that the lid be removed from the reaction vessel main body, so it was difficult to automate the work from the amplification of the target nucleic acids by PCR up to the accessing of the amplified fragments.

### DISCLOSURE OF THE INVENTION

In view of this, a first object of the present invention is to provide a reaction vessel, reaction apparatus, and method with which a reaction can be automated without requiring centrifugation when a reaction solution is held in a reaction chamber, the temperature of the reaction solution held in the reaction chamber can be rapidly controlled, the reaction can proceed even when just a tiny amount of reaction solution is held in the reaction chamber, and the reaction occurring in the reaction chamber can be monitored in real time (that is, instantly during the course of the reaction).

A second object of the present invention is to provide a reaction vessel, reaction apparatus, and method with which the above-mentioned first object can be achieved, and after the reaction has been conducted with the reaction vessel main body covered by the cover member, the reaction product contained in the reaction solution inside the reaction vessel can be accessed without removing the cover member from the reaction vessel main body.

(1) In order to achieve the stated objects, the reaction vessel of the present invention comprises a reaction vessel main body equipped with a reaction chamber having an opening and capable of holding a reaction solution, and a cover member capable of sealing the opening of the reaction chamber, wherein the cover member and the reaction chamber have a contact surface that comes into contact with the reaction solution held in the reaction chamber in a state in which the cover member is mounted on the reaction vessel main body, and the cover member is made of a light transmitting material so that light can pass from the reaction solution held in the reaction chamber, through the contact surface of the cover member, to the outside of the reaction vessel, or the reaction vessel main body is made of a light transmitting material so that light can pass from the reaction solution held in the reaction chamber, through the contact surface of the reaction chamber, to the outside of the reaction vessel.

The reaction chamber provided to the reaction vessel main body has an opening and is capable of holding a reaction solution, and the reaction solution is added through the opening in the reaction chamber and held in the reaction chamber. The reaction chamber is the place where the desired reaction takes place, and components required for the desired reaction to take place, reagents required for the measurement of the reaction progress (such as fluorescent dyes and other light-emitting substances), and so forth are contained in the reaction solution held in the reaction chamber.

There are no particular restrictions on the structure of the reaction chamber, as long as it has an opening and is capable of holding a reaction solution. In general, the reaction chamber is formed in the reaction vessel main body as a concave component having an opening at its upper end. The reaction chamber is preferably formed on the reaction vessel main body as a concave component consisting of a thin plate. In this case, heat movement between the outside of the reaction chamber and the reaction solution inside the reaction chamber occurs through this thin plate, allowing the temperature of the reaction solution to be controlled more rapidly and efficiently. Also, irradiation conditions and light reception conditions can be set more easily if the irradiation of the reaction chamber with light and the detection of light emitted from the reaction solution are performed through this thin plate.

There is no need for the reaction chamber to have a capillary structure, nor is it essential for centrifuging to be performed when the reaction solution is held in the reaction chamber. The reaction vessel of the present invention is designed such that when the cover member is placed over the reaction vessel main body, the cover member (e.g. a convex component provided to the cover member) enters the interior of the reaction chamber through the opening in the reaction chamber, and comes into contact with the reaction solution held in the reaction chamber. It is therefore preferable for the reaction chamber to have a structure that allows easy entry of cover member (such as a convex component provided to the cover member). It is also preferable, from the standpoint of automating the aliquoting of the reaction solution, for the reaction chamber to have a structure that allows the reaction solution added through the opening to reach the bottom of the reaction chamber without any downward force other than gravity being applied to the reaction solution. Accordingly, it is actually inappropriate for the reaction vessel of the present invention to have a reaction chamber with a capillary-like structure.

When the cover member covers the reaction vessel main body, the opening of the reaction chamber is sealed off by the cover member. This prevents the reaction solution held in the reaction chamber from being contaminated, and allows the desired reaction to be conducted more accurately within the reaction chamber. If the reaction vessel main body is equipped with a plurality of reaction chambers, then the openings of the various reaction chambers can be sealed by the cover member so as to prevent admixture of the reaction solution contained in one reaction chamber with the reaction solution contained in other reaction chambers, which allows the desired reaction to be accurately conducted in the various reaction chambers.

In terms of preventing contamination of the reaction solution contained in the reaction chamber, it is preferable for the cover member to have a first snug-fit component capable of fitting snugly against the periphery of the opening in the reaction chamber. In this case, the first snug-fit component of the cover member and the periphery of the opening in the reaction chamber fit snugly together to seal the reaction chamber, which prevents contamination of the reaction solution.

Also, in terms of preventing contamination of the reaction solution contained in the reaction chamber, it is preferable for the cover member to have a second snug-fit component capable of fitting snugly against the inner peripheral surface of the reaction chamber (the inner peripheral surface of the concave component formed in the reaction vessel main body). In this case, the second snug-fit component of the cover member and the inner peripheral surface of the reaction chamber fit snugly together to seal the reaction chamber, which prevents contamination of the reaction solution.

There are no particular restrictions on the structure of the cover member, as long as it has a contact surface capable of coming into contact with the reaction solution when the cover member is mounted on the reaction vessel main body. An example of the cover member structure is a flat plate in which a convex component has been formed. In this case, when the cover member is placed over the reaction vessel main body, the convex component enters the interior of the reaction chamber through the opening in the reaction chamber, and comes into contact with the reaction solution held in the reaction chamber. The convex component formed in the cover member preferably comprises a thin plate. In this case, heat movement between the outside of the reaction chamber and the reaction solution inside the reaction chamber occurs through this thin plate, allowing the temperature of the reaction solution to be controlled more rapidly and efficiently. Also, irradiation conditions and light reception conditions can be set more easily if the irradiation of the reaction chamber with light and the detection of light emitted from the reaction solution are performed through this thin plate.

The cover member and the reaction chamber have a contact surface that comes into contact with the reaction solution held in the reaction chamber when the cover member is mounted on the reaction vessel main body. In the present invention, the surface of the reaction chamber that comes into contact with the reaction solution is called the "contact surface of the reaction chamber," and the surface of the cover member that comes into contact with the reaction solution is called the "contact surface of the cover member." The contact surface of the reaction chamber and the contact surface of the cover member do not necessarily refer to a specific surface, and will vary (for example, increase and decrease the contact area) with the conditions (for example, the volume of reaction solution held in the reaction chamber). For instance, when the convex component of the cover member presses against the reaction solution, it raises the level of the reaction solution, which increases the contact surface of the reaction chamber and the contact surface of the cover member.

With the reaction vessel of the present invention, the temperature of the reaction solution is controlled as necessary during the desired reaction inside the reaction chamber. The temperature of the reaction solution is usually controlled after the cover member has been placed over the reaction vessel main body. However, reaction solution temperature control may also be carried out before the cover member is placed over the reaction vessel main body and/or during the process of the placing the cover member over the reaction vessel main body. If control of the reaction solution temperature is performed after the cover member has been placed over the reaction vessel main body, the temperature of the reaction solution can be controlled by the movement of heat through the contact surface of the reaction chamber and/or the contact surface and the cover member. This allows the temperature of the reaction solution to be controlled rapidly.

With the reaction vessel of the present invention, there are no particular restrictions on the reaction occurring within the reaction chamber, but the reaction vessel of the present invention can be used to advantage in reactions that demand control of the reaction solution temperature when the reaction is commenced, during its progress, or when it is halted (such as an enzyme reaction), and is especially suitable for use in reactions in which the temperature of the reaction solution needs to be controlled periodically or over time during the course of the reaction (such as a PCR). The phrase "control of the reaction solution temperature" as used here refers both to varying (raising and lowering) the temperature of the reaction solution and to maintaining the temperature of the reaction solution.

The reaction vessel of the present invention may further comprise a heat-conducting metal block or heat-conducting metal plate provided so as to be in contact with the reaction vessel main body and/or the cover member. In this case, temperature control of the reaction vessel main body is performed through the contact surface between the reaction vessel main body and the heat-conducting metal block or heat-conducting metal plate, and temperature control of the cover member is performed through the contact surface between the cover member and the heat-conducting metal block or heat-conducting metal plate. Temperature control of the reaction solution, meanwhile, is performed through the contact surface of the reaction chamber and/or the contact surface of the cover member. The heat-conducting metal block or heat-conducting metal plate may be provided so as to be in contact with either the reaction vessel main body or the cover member, or so as to be in contact with both. Since the heat-conducting metal block or heat-conducting metal plate can easily be molded to conform to the shapes of the reaction vessel main body and cover member, the contact area with the reaction vessel main body and the cover member can be increased. As a result, heat can be moved efficiently via the heat-conducting metal block or heat-conducting metal plate. In addition to being used as a medium for the movement of heat (heat exchanger), the heat-conducting metal block or heat-conducting metal plate can also be used as a member that supports the reaction vessel main body, or as a member that applies pressure to the cover member when the cover member is placed over the reaction vessel main body.

With the reaction vessel of the present invention, when the cover member is placed over the reaction vessel main body, the cover member (e.g. a convex component provided to the cover member) enters the interior of the reaction chamber through the opening in the reaction chamber, so that the air or other gas present inside the reaction chamber is pushed out of the reaction chamber, and the opening of the reaction chamber is sealed in this state. Therefore, the amount of air or other gas present inside the reaction chamber is less than that prior to the covering of the reaction chamber by the cover member. Furthermore, since the cover member (e.g. a convex component provided to the cover member) that enters the interior of the reaction chamber comes into contact with the reaction solution held in the reaction chamber, the contact area between the reaction solution and the air or other gas present in the reaction chamber is less than that prior to the covering by the cover member. Thus, when the cover member is placed over the reaction vessel main body, there is less air or other gas present inside the reaction chamber, and the contact area between the reaction solution and the air or other gas present inside the reaction chamber is also reduced, so when the desired reaction is conducted inside the reaction chamber, the evaporation of the reaction solution into the air or other gas present inside the reaction chamber can be suppressed. As a result, the reaction can proceed even when just a tiny amount of reaction solution is held in the reaction chamber.

With the reaction vessel of the present invention, the cover member is made of a light transmitting material so that light can pass from the reaction solution held in the reaction chamber, through the contact surface of the cover member, to the outside of the reaction vessel, or the reaction vessel main body is made of a light transmitting material so that light can pass from the reaction solution held in the reaction chamber, through the contact surface of the reaction chamber, to the outside of the reaction vessel.

The structure may be such that the light going from the reaction solution held in the reaction chamber to the outside of the reaction vessel can be transmitted through part of the contact surface of the cover member, or can be transmitted through all of the contact surface of the cover member. Also, as long as light can be transmitted from the reaction solution held in the reaction chamber, through the contact surface of the cover member, to the outside of the reaction vessel, the structure may be such that only part of the cover member is made of a light transmitting material, or such that all of the cover member is made of a light transmitting material.

The structure may be such that the light going from the reaction solution held in the reaction chamber to the outside of the reaction vessel can be transmitted through part of the contact surface of the reaction chamber, or can be transmitted through all of the contact surface of the reaction chamber. Also, as long as light can be transmitted from the reaction solution held in the reaction chamber, through the contact surface of the reaction chamber, to the outside of the reaction vessel, the structure may be such that only part of the reaction vessel main body is made of a light transmitting material, or such that all of the reaction vessel is made of a light transmitting material.

With the reaction vessel of the present invention, just the cover member or the reaction vessel main body may be made from a light transmitting material, or both may be made from a light transmitting material. If just the cover member or the reaction vessel main body is made from a light transmitting material, then the other will be made of an opaque material.

There are no particular restrictions on the type of light transmitting material, and any material can be used that is transparent or semi-transparent and has the strength required of the cover member and the reaction vessel main body. Examples of this material include plastics and glass.

With the reaction vessel of the present invention, the light (such as fluorescent light or chemical luminescence) emitted from the reaction solution held in the reaction chamber is transmitted through the contact surface of the cover member and/or the contact surface of the reaction chamber to the outside of the reaction vessel. Specifically, with the reaction vessel of the present invention, the light (such as fluorescent light or chemical luminescence) emitted from the reaction solution held in the reaction chamber can be detected outside the reaction vessel, with the reaction solution still held inside the reaction chamber. Therefore, if the light emitted from the reaction solution is used as an index of the progress of the reaction occurring in the reaction chamber, the progress of the reaction can be monitored in real time (that is, instantly during the course of the reaction) by detecting the light emitted from the reaction solution.

The term "monitor" as used here includes quantitative and qualitative measurement and analysis performed continuously or intermittently during the course of the reaction, as well as quantitative and qualitative measurement and analysis after the reaction has reached a steady state or after completion of the reaction, for example. Also, the phrase "progress of the reaction" as used here includes status and degree of the reaction.

The light emitted from the reaction solution may be detected through just the contact surface of the cover member or the contact surface of the reaction chamber, or through both of these. The light emitted from the reaction solution may also be detected through all or part of the contact surface of the cover member and/or the reaction chamber.

(2) In a first aspect of the present invention, the cover member is made of a light transmitting material so that light can pass from the outside of the reaction vessel, through the contact surface of the cover member, to the reaction solution held in the reaction chamber, or the reaction vessel main body is made of a light transmitting material so that light can pass from the outside of the reaction vessel, through the contact surface of the reaction chamber, to the reaction solution held in the reaction chamber.

With the reaction vessel pertaining to this aspect, if the cover member is made of a light transmitting material so that light can pass from the outside of the reaction vessel, through the contact surface of the cover member, to the reaction solution held in the reaction chamber, the reaction solution held in the reaction chamber can be irradiated through the contact surface of the cover member with excitation light emitted from a laser or other light source provided to the outside of the reaction vessel of the present invention. If a fluorescent dye or other fluorescent material is added ahead of time to the reaction solution, then the fluorescent material will be excited by the irradiation of the reaction solution with the excitation light, and fluorescent light will be emitted from the reaction solution. Since the fluorescent light emitted from the reaction solution is transmitted through the contact surface of the cover member and/or the contact surface of the reaction chamber to the outside of the reaction vessel of the present invention, this light can be detected by a fluorescent light detector provided to the outside of the reaction vessel of the present invention.

With the reaction vessel pertaining to this aspect, if the reaction vessel main body is made of a light transmitting material so that light can pass from the outside of the reaction vessel, through the contact surface of the reaction chamber, to the reaction solution held in the reaction chamber, the reaction solution held in the reaction chamber can be irradiated through the contact surface of the reaction chamber with excitation light emitted from a laser or other light source provided to the outside of the reaction vessel of the present invention. If a fluorescent dye or other fluorescent material is added ahead of time to the reaction solution, then the fluorescent material will be excited by the irradiation of the reaction solution with the excitation light, and fluorescent light will be emitted from the reaction solution. Since the fluorescent light emitted from the reaction solution is transmitted through the contact surface of the cover member and/or the contact surface of the reaction chamber to the outside of the reaction vessel of the present invention, this light can be detected by a fluorescent light detector provided to the outside of the reaction vessel of the present invention.

With the reaction vessel pertaining to this aspect, the structure may be such that light going from the outside of the reaction vessel to the reaction solution held in the reaction chamber can be transmitted through part of the contact surface of the cover member and/or the reaction chamber, or can be transmitted through all of the contact surface. Also, as long as light can be transmitted from the outside of the reaction vessel, through the contact surface of the cover member, to the reaction solution held in the reaction chamber, the structure may be such that only part of the cover member is made of a light transmitting material, or such that all of the cover member is made of a light transmitting material. Also, as long as light can be transmitted from the outside of the reaction vessel, through the contact surface of the reaction chamber, to the reaction solution held in the reaction chamber, the structure may be such that only part of the reaction vessel main body is made of a light transmitting material, or such that all of the reaction vessel main body is made of a light transmitting material.

With the reaction vessel pertaining to this aspect, the irradiation of the reaction solution with the excitation light and the detection of the fluorescent light emitted from the reaction solution held in the reaction chamber can be performed outside the reaction vessel, with the reaction solution still held inside the reaction chamber. Therefore, if a fluorescent material that can serve as an index of the progress of the reaction is added ahead of time to the reaction solution, the progress of the reaction can be monitored in real time (that is, instantly during the course of the reaction) by detecting the fluorescent light emitted by this fluorescent material during the course of the reaction.

The fluorescent material that can serve as an index of the reaction progress can be suitably selected according to the type of reaction occurring in the reaction chamber. For instance, if the reaction occurring in the reaction chamber is a PCR, it is possible to use a fluorescent material whose fluorescent characteristics, such as fluorescent intensity and fluorescent wavelength, are varied by the amount of nucleic acids (such as DNA) in the reaction solution. In specific terms, this can be a fluorescent dye whose characteristics, such as fluorescent intensity and fluorescent wavelength, are varied by intercalation with double-stranded DNA. From the standpoint of ease of measurement, a fluorescent dye having the property of increasing in fluorescent intensity is preferable. Specific examples of such fluorescent dyes include ethidium bromide (EtBr), SYBR Green I, Pico Green, thiazole orange, and oxazole yellow. For example, ethidium bromide intercalated with DNA emits fluorescent light when excited by energy conversion of UV rays (260 nm) absorbed by the DNA, or by its own absorbed light. SYBR Green I that has been intercalated with DNA emits green fluorescent light when excited by visible light around 470 nm or by UV rays around 260 nm. The fluorescent intensity of the light emitted by these fluorescent dyes is proportional to the amount of double-stranded DNA, so the progress of the PCR in the reaction chamber (such as whether or not the target nucleic acids have been amplified, or the amount of PCR amplification product) can be monitored in real time (that is, instantly during the course of the PCR) by measuring the fluorescent intensity of the fluorescent dye.

The fluorescent material that can serve as an index of the progress of a PCR can also be one in which two types of fluorescent dye (a reporter and a quencher) are bonded to an oligonucleotide probe that is complementary with the middle portion of the target sequence. A reporter is a molecule that emits fluorescent light upon being irradiated with excitation light, but in the case of an oligonucleotide probe in which a quencher is present in the vicinity of a reporter, the energy absorbed by the reporter is absorbed by the quencher, the reporter is not excited, and the fluorescent light that was supposed to be produced is not produced (quenching). If an oligonucleotide probe undergoing quenching is added to a PCR reaction solution held in the reaction chamber, it bonds to the target sequence. A chain is then extended from the 3'-end of the primer by means of Taq polymerase, but if it hits the probe during this time, the probe, which has already been annealed by 5'→3' endonuclease activity, is decomposed, the adjacent reporter and quencher separate, and the reporter, which had been suppressed by the quencher, then begins to emit fluorescent light. Since this reaction occurs substantially in proportion to the PCR cycle, the progress of the PCR in the reaction chamber can be monitored in real time by measuring the fluorescent intensity of the reporter.

The fluorescent material that can serve as an index of the progress of a PCR can also be one in which a fluorescent dye is bonded to two types of oligonucleotide probe that hybridize adjacent to the target nucleic acid. If donor dye is bonded to the 3'-end of the probe on the 5'-side, while an acceptor dye is bonded to the 5'-end of the probe on the 3'-side, and if two types of probe hybridize adjacent to the target nucleic acid, the donor dye emits fluorescent light upon irradiation with the excitation light from an external light source, this light is absorbed by the acceptor dye, and the acceptor dye at this point gives off light of a different wavelength. As the PCR amplification product increases, the amount of probe hybridizing to the target nucleic acid also increases, so the progress of the PCR in the reaction chamber can be monitored in real time by measuring the fluorescent intensity.

(3) In a second aspect of the reaction vessel of the present invention, all or part of the contact surface of the cover member is flat.

With the reaction vessel pertaining to this aspect, the irradiation of the reaction solution with the excitation light and the detection of the fluorescent light emitted from the reaction solution can be performed through all or part of the flat contact surface of the cover member, which means that excitation light irradiation conditions and fluorescent light reception conditions can be set more easily.

(4) In a third aspect of the reaction vessel of the present invention, the contact surface of the cover member is the surface of the wall component of substantially uniform thickness that constitutes the cover member.

With the reaction vessel pertaining to this aspect, temperature control of the reaction solution held in the reaction chamber can be performed through the wall component (in the form of a plate, for example) of substantially uniform thickness having the contact surface of the cover member, and as a result the temperature of the reaction solution can be controlled rapidly and efficiently. The temperature control conditions here can also be set easily. Also, the irradiation of the reaction solution held in the reaction chamber with the excitation light and the detection of fluorescent light from the reaction solution can be performed through the wall component of substantially uniform thickness having the contact surface of the cover member, which means that excitation light irradiation conditions and fluorescent light reception conditions can be set more easily. Particularly when all or part of the contact surface of the cover member is flat, this wall component is also flat, so the contact surface of the cover member at this wall component is substantially parallel to the opposite surface, which means that excitation light irradiation conditions and fluorescent light reception conditions can be set even more easily.

(5) In a fourth aspect of the reaction vessel of the present invention, all or part of the contact surface of the reaction chamber is flat.

With the reaction vessel pertaining to this aspect, the irradiation of the reaction solution with the excitation light and the detection of the fluorescent light emitted from the reaction solution can be performed through all or part of the flat contact surface of the reaction chamber, which means that excitation light irradiation conditions and fluorescent light reception conditions can be set more easily.

(6) In a fifth aspect of the reaction vessel of the present invention, the contact surface of the reaction chamber is the surface of the wall component of substantially uniform thickness that constitutes the reaction vessel main body.

With the reaction vessel pertaining to this aspect, the temperature of the reaction solution held in the reaction chamber can be controlled through the wall component (in the form of a plate, for example) of substantially uniform thickness having the contact surface of the reaction chamber, allowing the temperature of the reaction solution to be controlled more rapidly and efficiently. Also, temperature control here conditions can be set more easily. Also, the irradiation of the reaction solution held in the reaction chamber with the excitation light and the detection of the fluorescent light from the reaction solution can be performed through the wall component of substantially uniform thickness having the contact surface of the reaction chamber, which means that excitation light irradiation conditions and fluorescent light reception conditions can be set more easily. Particularly when all or part of the contact surface of the reaction chamber is flat, this wall component will be in the form of a flat plate, so the contact surface of the reaction chamber at this wall component is substantially parallel to the opposite surface, which means that excitation light irradiation conditions and fluorescent light reception conditions can be set even more easily.

(7) In a sixth aspect of the reaction vessel of the present invention, a tightly closed space is formed by the contact surface of the reaction chamber and the contact surface of the cover member when the cover member is mounted on the reaction vessel main body, and all or part of the reaction solution is held in the tightly closed space.

With the reaction vessel pertaining to this aspect, when the cover member is mounted on the reaction vessel main body, the end of the contact surface of the cover member fits snugly with the end of the contact surface of the reaction chamber, forming a tightly closed space. Whether all or just part of the reaction solution will be held in this tightly closed space is determined according to the volume of reaction solution held in the reaction chamber, the volume of the tightly closed space that is formed, and so forth.

With the reaction vessel pertaining to this aspect, all (or nearly all) of the outer surface of the reaction solution held in the tightly closed space becomes the contact surface with the cover member and the reaction chamber, so the temperature of the reaction solution can be rapidly controlled through the contact surface of the cover member and/or the contact surface of the reaction chamber.

Also, since there is no air or other such gas (or almost none) present in the tightly closed space, evaporation of the reaction solution into gas can be suppressed while the desired reaction proceeds within the tightly closed space, which means that the reaction will proceed even if there is only a tiny amount of reaction solution held in the reaction chamber.

(8) In a seventh aspect of the reaction vessel of the present invention, a surplus reaction solution holder capable of holding any surplus reaction solution that cannot be held in the tightly closed space is formed in the reaction chamber when the cover member is mounted on the reaction vessel main body.

With the reaction vessel pertaining to this aspect, reaction solution whose volume is greater than that which can be held in the tightly closed space is held in the reaction chamber, and the reaction solution is pressed by the cover member (such as a convex component provided to the cover member), the result of which is that any air in the reaction chamber, bubbles in the reaction solution, or the like is pushed out into the surplus reaction solution holder along with the reaction solution that cannot be held in the tightly closed space, and this prevents air or bubbles from getting into the reaction solution held in the tightly closed space. Also, since a constant amount of reaction solution is held in the tightly closed space, the reaction will proceed for a constant amount of reaction solution regardless of the volume of reaction solution held in the reaction chamber, which reduces the labor for metering the reaction solution precisely and adding it to the reaction chamber.

With the reaction vessel pertaining to this aspect, the surplus reaction solution holder is formed in the reaction chamber as follows. When the cover member has been placed over the reaction vessel main body, the outer peripheral surface of the convex component of the cover member does not fit snugly against the inner peripheral surface of the reaction chamber, forming a space between the outer peripheral surface of the convex component of the cover member and the inner peripheral surface of the reaction chamber, and this space serves as the surplus reaction solution holder.

(9) In an eighth aspect of the reaction vessel of the present invention, the reaction chamber has an opposing surface opposite the contact surface of the cover member, and when the cover member is mounted on the reaction vessel main body, all or part of the reaction solution held in the reaction chamber is held in the form of a thin layer between the contact surface of the cover member and the opposing surface of the reaction chamber.

In the present invention, of the contact surface of the reaction chamber, the surface that is opposite the contact surface of the cover member is called the "opposing surface of the reaction chamber." If the contact surface of the cover member is flat, then the opposing surface of the reaction chamber is preferably flat so as to correspond, and if the contact surface of the cover member is curved, then the opposing surface is preferably curved so as to correspond.

With the reaction vessel pertaining to this aspect, the reaction is monitored for the reaction solution held in the form of a thin layer between the contact surface of the cover member and the opposing surface of the reaction chamber. Here, the reaction solution in the form of a thin layer has a large ratio of surface area to volume, so the temperature of the reaction solution can be rapidly controlled by the movement of heat through the contact surface of the reaction chamber and/or the contact surface of the cover member. Also, having the reaction solution in the form of a thin layer allows temperature control to be performed more uniformly for the entire reaction solution.

(10) In a ninth aspect of the reaction vessel of the present invention, the opposing surface of the reaction chamber is the surface of the wall component of substantially uniform thickness that constitutes the reaction vessel main body.

With the reaction vessel pertaining to this aspect, the temperature of the reaction solution held in the reaction chamber can be controlled through the wall component (in the form of a plate, for example) of substantially uniform thickness having the opposing surface of the reaction chamber, which allows the temperature of the reaction solution to be controlled more rapidly and efficiently. The setting of the temperature control conditions here is also easier. Furthermore, the irradiation of the reaction solution held in the reaction chamber with the excitation light and the detection of the fluorescent light from the reaction solution can be performed through the wall component of substantially uniform thickness having the opposing surface of the reaction chamber, which means that excitation light irradiation conditions and fluorescent light reception conditions can be set more easily. In particular, if all or part of the opposing surface of the reaction chamber is flat, this wall component will be in the form of a flat plate, and the opposing surface of the reaction chamber at this wall component will be substantially parallel to the surface on the opposite side, which means that excitation light irradiation conditions and fluorescent light reception conditions can be set even more easily.

(11) In a tenth aspect of the reaction vessel of the present invention, the wall component having the opposing surface of the reaction chamber is made of a light transmitting material so that light can pass from the outside of the reaction vessel to the reaction solution held in the reaction chamber, and/or from the reaction solution held in the reaction chamber to the outside of the reaction vessel, through the opposing surface of the reaction chamber.

With the reaction vessel pertaining to this aspect, if light can pass from the outside of the reaction vessel to the reaction solution held in the reaction chamber through the opposing surface of the reaction chamber, then the reaction solution held in the reaction chamber is irradiated with light from the outside of the reaction vessel through the opposing surface of the reaction chamber. If light can pass from the reaction solution held in the reaction chamber to the outside of the reaction vessel through the opposing surface of the reaction chamber, then the light (such as fluorescent light or chemical luminescence) emitted from the reaction solution held in the reaction chamber can be detected on the outside of the reaction vessel through the opposing surface of the reaction chamber. Therefore, the irradiation of the reaction solution with light and/or the detection of light emitted from the reaction solution performed in the monitoring of the reaction can be performed through the opposing surface of the reaction chamber.

(12) In an eleventh aspect of the reaction vessel of the present invention, the reaction vessel main body has an abutting surface that defines the distance between the contact surface of the cover member and the opposing surface of the reaction chamber by abutting against the cover member.

With the reaction vessel pertaining to this aspect, the thickness of the reaction solution held between the contact surface of the cover member and the opposing surface of the reaction chamber is kept constant by keeping constant the distance between the contact surface of the cover member and the opposing surface of the reaction chamber, so temperature control can be carried out uniformly for the entire reaction solution. Also, the thickness of the reaction solution can be adjusted by adjusting the distance between the contact surface of the cover member and the opposing surface of the reaction chamber.

With the reaction vessel pertaining to this aspect, the reaction vessel main body may have the abutting surface either inside or outside the reaction chamber. For example, the abutting surface may be provided along the inner peripheral surface of the reaction chamber. In this case, when the cover member is mounted on the reaction vessel main body, the cover member fits snugly around the inner peripheral surface of the reaction chamber, sealing off the inside of the reaction chamber.

(13) In a twelfth aspect of the reaction vessel of the present invention, the reaction chamber has an enveloping surface that envelops the reaction solution present between the contact surface of the cover member and the opposing surface of the reaction chamber, and when the cover member is mounted on the reaction vessel main body, a tightly closed space is formed by the contact surface of the cover member, the opposing surface of the reaction chamber, and the enveloping surface of the reaction chamber, and all or part of the reaction solution is held in the form of a thin layer within the tightly closed space.

In the present invention, of the contact surface of the reaction chamber, the surface that envelops the reaction solution present between the contact surface of the cover member and the opposing surface of the reaction chamber is called the "enveloping surface of the reaction chamber." The shape of the enveloping surface of the reaction chamber will be determined by the shape of the contact surface of the cover member and the opposing surface of the reaction chamber. For instance, if the contact surface of the cover member and the opposing surface of the reaction chamber are circular, then the enveloping surface of the reaction chamber will be cylindrical, and if the contact surface of the cover member and the opposing surface of the reaction chamber are rectangular, the enveloping surface of the reaction chamber will be in the form of an angular cylinder. The lateral cross sectional shape of the enveloping surface can be selected as desired, but examples include circular, quadrangular (including both square and rectangular), semicircular, and parallelogram-shaped.

With the reaction vessel pertaining to this aspect, the end of the opposing surface of the reaction chamber communicates with the end (usually the lower end) of the enveloping surface of the reaction chamber, and when the cover member is mounted on the reaction vessel main body, the end of the contact surface of the cover member fits snugly with the end (usually the upper end) of the enveloping surface of the reaction chamber. As a result, a tightly closed space is formed by the contact surface of the cover member, the opposing surface of the reaction chamber, and the enveloping surface of the reaction chamber.

With the reaction vessel pertaining to this aspect, the reaction is monitored for the reaction solution held in the form of a thin layer in the tightly closed space. Here, the reaction solution in the form of a thin layer has a large ratio of surface area to volume, so the temperature of the reaction solution can be rapidly controlled by the movement of heat through the contact surface of the reaction chamber and/or the contact surface of the cover member. Also, if the reaction solution is in the form of a thin layer, the thickness of the reaction solution will be substantially uniform, which allows temperature control to be performed more uniformly for the entire reaction solution. Furthermore, since there is no air or other such gas (or almost none) present in the tightly closed space, evaporation of the reaction solution into gas can be suppressed while the desired reaction proceeds within the tightly closed space, which means that the reaction will proceed even if there is only a tiny amount of reaction solution held in the reaction chamber.

(14) In a thirteenth aspect of the reaction vessel of the present invention, all or part of the enveloping surface of the reaction chamber is flat.

With the reaction vessel pertaining to this aspect, the irradiation of the reaction solution with excitation light or the detection of fluorescent light from the reaction solution can be performed through all or part of the flat enveloping surface of the reaction chamber, which means that the excitation light irradiation conditions and fluorescent light reception conditions can be set more easily.

(15) In a fourteenth aspect of the reaction vessel of the present invention, a lateral cross section of the enveloping surface of the reaction chamber is quadrangular.

With the reaction vessel pertaining to this aspect, the enveloping surface of the reaction chamber comprises four planes, and the opposing pairs of planes are parallel. Therefore, by utilizing the rectilinear propagation property of light, it is possible to irradiate the entire reaction solution with light and to detect the light emitted from the entire reaction solution through a single plane constituting the enveloping surface of the reaction chamber. Also, the excitation light irradiation conditions and fluorescent light reception conditions can be set more easily.

(16) In a fifteenth aspect of the reaction vessel of the present invention, the enveloping surface of the reaction chamber is the surface of the wall component of substantially uniform thickness that constitutes the reaction vessel main body.

With the reaction vessel pertaining to this aspect, the temperature of the reaction solution held in the reaction chamber can be controlled through the wall component (in the form of a plate, for example) of substantially uniform thickness having the enveloping surface of the reaction chamber, which allows the temperature of the reaction solution to be controlled rapidly and efficiently. The temperature control conditions here can also be set more easily. Also, the irradiation of the reaction solution held in the reaction chamber with excitation light or the detection of fluorescent light from the reaction solution can be performed through the wall component of substantially uniform thickness having the enveloping surface of the reaction chamber, which means that excitation light irradiation conditions and fluorescent light reception conditions can be set more easily. In particular, if all or part of the enveloping surface of the reaction chamber is flat, this wall component will be in the form of a flat plate, and the enveloping surface of the reaction chamber at this wall component will be substantially parallel to the surface on the opposite side, which means that excitation light irradiation conditions and fluorescent light reception conditions can be set even more easily.

(17) In a sixteenth aspect of the reaction vessel of the present invention, the wall component having the enveloping surface of the reaction chamber is made of a light transmitting material so that light can pass from the outside of the reaction vessel to the reaction solution held in the reaction chamber, and/or from the reaction solution held in the reaction chamber to the outside of the reaction vessel, through the enveloping surface of the reaction chamber.

With the reaction vessel pertaining to this aspect, if light can pass from the outside of the reaction vessel to the reaction solution held in the reaction chamber through the enveloping surface of the reaction chamber, then the reaction solution held in the reaction chamber can be irradiated with light from the outside of the reaction vessel through the enveloping surface of the reaction chamber. If light can pass from the reaction solution held in the reaction chamber to the outside of the reaction vessel through the enveloping surface of the reaction chamber, then the light (such as fluorescent light or chemical luminescence) emitted from the reaction solution held in the reaction chamber can be detected on the outside of the reaction vessel through the enveloping surface of the reaction chamber. Therefore, the irradiation of the reaction solution with light and/or the detection of light emitted from the reaction solution performed in the monitoring of the reaction can be performed through the enveloping surface of the reaction chamber.

With the reaction vessel pertaining to this aspect, the temperature of the reaction solution held in the reaction chamber is controlled by the movement of heat through the contact surface of the cover member and/or the opposing surface of the reaction chamber, and the irradiation of the reaction solution with light and/or the detection of light emitted from the reaction solution performed in the monitoring of the reaction can be performed through the enveloping surface of the reaction chamber. Thus having the surface utilized for controlling the temperature of the reaction solution be separate from the surface utilized for monitoring the progress of the reaction allows the temperature of the reaction solution to be controlled rapidly and also allows the region where the reaction progress is monitored to be set freely. It is also possible to monitor the reaction progress for the entire reaction solution.

(18) In a seventeenth aspect of the reaction vessel of the present invention, a nozzle tip fitting space, into which a nozzle tip mounted on a nozzle capable of the intake and discharge of a liquid can be fitted, is formed in the cover member of the reaction vessel pertaining to the sixth aspect, and a nozzle tip fitting hole leading to the nozzle tip fitting space is formed so as to allow the nozzle tip to be fitted into the nozzle tip fitting space while the cover member is mounted on the reaction vessel main body, and a through-hole communicating between the outside of the reaction vessel, the tightly closed space, and the nozzle tip fitting space can be formed in the reaction vessel main body and the cover member by a puncture needle provided on the outside of the reaction vessel while the cover member is mounted on the reaction vessel main body.

When the desired reaction is conducted utilizing the reaction vessel pertaining to this aspect, all or part of the reaction solution is held and the desired reaction is brought about in the tightly closed space formed by the contact surface of the cover member and the contact surface of the reaction chamber.

Either before or after the reaction, the nozzle tip mounted on the nozzle is mounted through the nozzle tip fitting hole in the nozzle tip fitting space of the reaction vessel while the cover member is mounted on the reaction vessel main body. The nozzle tip mounted in the nozzle tip fitting space is an intermediary member capable of transmitting the intake force (reduced pressure) or discharge force (pressurization) of the nozzle to the outside of the nozzle tip. One example of a nozzle tip that can be used is one in which a nozzle mounting hole is formed at one end, and an intake and discharge port leading to the nozzle mounting hole is formed at the other end. When a nozzle tip such as this is used, for example, the nozzle tip is mounted in the nozzle tip fitting space so that the intake and discharge port of the nozzle tip leads to the nozzle tip fitting space. Here, the location of the intake and discharge port of the nozzle tip inside the nozzle tip fitting space is defined by the abutting of the cover member against the abutting component of the nozzle tip, for example.

Either before or after the mounting of the nozzle tip in the nozzle tip fitting space, a through-hole communicating between the outside of the reaction vessel, the tightly closed space in which the reaction solution is held, and the nozzle tip fitting space can be formed in the reaction vessel main body and the cover member by a puncture needle provided on the outside of the reaction vessel. This puncture needle first punctures the reaction vessel main body, forming a through-hole communicating between the outside of the reaction vessel and the tightly closed space in which the reaction solution is held, and then punctures the cover member, forming a through-hole communicating between the tightly closed space in which the reaction solution is held and the nozzle tip fitting space. When the reaction vessel has thus undergone mounting of the nozzle tip and puncture by the puncture needle, the outside of the reaction vessel communicates with the tightly closed space in which the reaction solution is held, through the through-hole formed in the reaction vessel main body, the tightly closed space in which the reaction solution is held communicates with the nozzle tip fitting space through the through-hole formed in the cover member, and the nozzle tip fitting space leads to the intake and discharge portion of the nozzle tip, so the intake force and discharge force of the nozzle can be transmitted to the outside of the reaction vessel. Therefore, when the reaction vessel is immersed in a liquid so that the through-hole formed in the reaction vessel main body is also immersed in this liquid, and the intake and discharge of the nozzle are commenced, the above-mentioned liquid flows into the tightly closed space holding the reaction solution along with the intake of the nozzle, and flows out of the tightly closed space along with the discharge of the nozzle. When this intake and discharge of the nozzle are repeated over and over, the reaction solution held in the tightly closed space of the reaction vessel is extracted into the above-mentioned liquid. As the reaction solution is extracted, the reaction product contained in the reaction solution is also extracted into the above-mentioned liquid.

Thus, if the reaction vessel pertaining to this aspect is utilized, the reaction product contained in the reaction solution can be acquired without removing the cover member from the reaction vessel main body after the reaction has been conducted with the cover member covering the reaction vessel main body.

The nozzle tip may also be mounted in the nozzle tip fitting space so that the intake and discharge port of the nozzle tip is sealed off by contact with the wall component of the cover member forming the nozzle tip fitting space. However, the wall component of the cover member that seals off the intake and discharge port of the nozzle tip must have a contact surface with the tightly closed space in which the reaction solution is held. In this case, a through-hole that communicates with the outside of the reaction chamber, the tightly closed space in which the reaction solution is held, and the intake and discharge port of the nozzle tip is formed in the reaction vessel main body and the cover member by the puncture needle provided on the outside of the reaction vessel, either before or after the mounting of the nozzle tip in the nozzle tip fitting space. The through-hole that communicates with the tightly closed space in which the reaction solution is held and the intake and discharge port of the nozzle tip is formed in the wall component of the cover member that seals off the intake and discharge port of the nozzle tip. When the reaction vessel has thus undergone mounting of the nozzle tip and puncture by the puncture needle, the outside of the reaction vessel communicates with the tightly closed space in which the reaction solution is held, through the through-hole formed in the reaction vessel main body, and the tightly closed space in which the reaction solution is held communicates with the intake and discharge port of the nozzle tip through the through-hole formed in the cover member, so the intake force and discharge force of the nozzle can be transmitted to the outside of the reaction vessel. Therefore, just as above, when the reaction vessel is immersed in a liquid so that the through-hole formed in the reaction vessel main body is also immersed in this liquid, and the intake and discharge of the nozzle are repeated over and over, the reaction product contained in the reaction solution is extracted into the above-mentioned liquid.

With the reaction vessel pertaining to this aspect, the size and shape of the nozzle tip fitting space formed in the cover member, and of the nozzle tip fitting hole leading to this nozzle tip fitting space are suitably adjusted according to the size and shape of the nozzle to be mounted in the nozzle tip fitting space. Also, the nozzle tip fitting hole is formed at a location where the nozzle tip can be mounted in the nozzle tip fitting space through the nozzle tip fitting hole while the cover member is mounted on the reaction vessel main body.

With the reaction vessel pertaining to this aspect, the reaction vessel main body and the cover member are made of a material that will not be corroded by the reaction solution and that can withstand the reaction conditions (such as the reaction temperature). The selected material must be one that allows the reaction vessel main body and the cover member to be punctured by the puncture needle provided to the outside of the reaction vessel. If the puncture needle is made from a metal such as stainless steel, then a plastic or glass can be selected, for example, as the material for the reaction vessel main body and the cover member.

With the reaction vessel pertaining to this aspect, the relative positions of the tightly closed space holding the reaction solution and the nozzle tip fitting space are adjusted so that the through-hole that communicates between the outside of the reaction vessel, the tightly closed space in which the reaction solution is held, and the nozzle tip fitting space can be formed in the reaction vessel main body and the cover member by the puncture needle provided on the outside of the reaction vessel.

There are no particular restrictions on the shape of the puncture needle provided on the outside of the reaction vessel pertaining to this aspect, as long as it allows the cover member and the reaction vessel main body to be punctured, but an example of the shape of the puncture needle is one that is tapered at the distal end. Specific examples include conical, pyramidal, and acicular shapes. The term "tapered" as used here means a shape that narrows toward the distal end, and in addition to a shape in which the distal end is pointed, also includes a shape in which the distal end is rounded, a shape in which the distal end is flat, and so forth. The material of the puncture needle is suitably determined according to the materials of the cover member and the reaction vessel main body so that these can be punctured, but is usually stainless steel or another metal. There are no particular restrictions on the number of puncture needles used for puncturing. The length of the puncture needle is suitably adjusted so that the desired through-hole can be formed.

(19) In an eighteenth aspect of the reaction vessel of the present invention, a nozzle tip fitting space, into which a nozzle tip mounted on a nozzle capable of the intake and discharge of a liquid can be fitted, is formed in the cover member of the reaction vessel pertaining to the twelfth aspect, and a nozzle tip fitting hole leading to the nozzle tip fitting space is formed so as to allow the nozzle tip to be fitted into the nozzle tip fitting space while the cover member is mounted on the reaction vessel main body, and a through-hole communicating between the outside of the reaction vessel, the tightly closed space, and the nozzle tip fitting space can be formed in the reaction vessel main body and the cover member by a puncture needle provided on the outside of the reaction vessel while the cover member is mounted on the reaction vessel main body.

When the desired reaction is conducted utilizing the reaction vessel pertaining to this aspect, all or part of the reaction solution is held and the desired reaction is brought about in the tightly closed space formed by the contact surface of the cover member, the opposing surface of the reaction chamber, and the enveloping surface of the reaction chamber.

When the reaction vessel pertaining to this aspect is utilized, just as with the reaction vessel pertaining to the seventeenth aspect, the reaction product contained in the reaction solution can be acquired without removing the cover member from the reaction vessel main body after the reaction has been conducted with the cover member covering the reaction vessel main body.

(20) In a nineteenth aspect of the reaction vessel of the present invention, the nozzle tip fitting space is formed so that the nozzle tip fitting space is closed off when the nozzle tip fitting hole is sealed.

With the reaction vessel pertaining to this aspect, the nozzle tip fitting space is closed off by mounting the nozzle tip in the nozzle tip fitting space, so the intake and discharge forces of the nozzle can be efficiently transmitted to the nozzle tip fitting space. The term "closed off" as used here means that there are no gaps, slits, or the like that would hinder the transmission of the intake force (reduced pressure) or discharge force (pressurization) of the nozzle to the nozzle tip fitting space, and a state in which the nozzle tip fitting space leads to the intake and discharge port of the nozzle tip is encompassed by "closed off." A state in which gaps, slits, and so forth are present to the extent that they pose no hindrance to the transmission of the intake force (reduced pressure) or discharge force (pressurization) of the nozzle to the nozzle tip fitting space is also encompassed by "closed off."

(21) In a twentieth aspect of the reaction vessel of the present invention, the wall component of the cover member forming the nozzle tip fitting space has an inner peripheral surface capable of fitting snugly against the outer peripheral surface of the nozzle tip.

With the reaction vessel pertaining to this aspect, when the nozzle tip is mounted in the nozzle tip fitting space, the outer peripheral surface of the nozzle tip fits snugly against the inner peripheral surface of the wall component of the cover member forming the nozzle tip fitting space, thereby closing off the nozzle tip fitting space.

(22) In a twenty-first aspect of the reaction vessel of the present invention, a convex component and/or a concave component capable of fitting with a concave component and/or a convex component provided on the outer peripheral surface of the nozzle tip is provided on the inner peripheral surface of the wall component of the cover member capable of snugly fitting against the outer peripheral surface of the nozzle tip.

With the reaction vessel pertaining to this aspect, the nozzle tip is mounted more securely in the nozzle tip fitting space, so even if a force in the direction opposite the mounting direction into the nozzle tip fitting space is exerted on the nozzle tip mounted in the nozzle tip fitting space, the nozzle tip will not come out of the nozzle tip fitting space. Therefore, it is possible to move the reaction vessel while the cover member is mounted on the reaction vessel main body, by moving the nozzle on which is mounted the nozzle tip in the nozzle tip fitting space.

(23) In a twenty-second aspect of the reaction vessel of the present invention, the contact surface of the cover member is the surface of the wall component of the cover member forming the nozzle tip fitting space.

With the reaction vessel pertaining to this aspect, a through-hole communicating between the tightly closed space in which the reaction solution is held and the nozzle tip fitting space is formed in the wall component of the cover member having a contact surface with the reaction solution, which is the wall component of the cover member forming the nozzle tip fitting space. Also, since the wall component of the cover member is opposite some portion of the wall component of the reaction vessel main body forming the tightly closed space in which the reaction solution is held, a through-hole communicating between the outside of the reaction vessel, the tightly closed space in which the reaction solution is held, and the nozzle tip fitting space can be formed in the reaction vessel main body and the cover member by a single puncture needle provided on the outside of the reaction vessel.

(24) In a twenty-third aspect of the reaction vessel of the present invention, the contact surface of the cover member is the surface of the wall component of the cover member forming the deepest portion of the nozzle tip fitting space.

Here, "the deepest portion of the nozzle tip fitting space" means the portion of the nozzle tip fitting space that is farthest away from the nozzle tip fitting hole. With the reaction vessel pertaining to this aspect, the nozzle tip is mounted toward the deepest part of the nozzle tip fitting space from the nozzle tip fitting hole.

(25) In a twenty-fourth aspect of the reaction vessel of the present invention, the wall component of the cover member forming the deepest portion of the nozzle tip fitting space is provided so as to oppose the wall component of the reaction vessel main body forming the deepest part of the tightly closed space.

Here, "the deepest part of the tightly closed space" means the portion of the tightly closed space in which the reaction solution is held that is closest to the surface on which the reaction vessel is placed. With the reaction vessel pertaining to this aspect, a through-hole communicating between the outside of the reaction vessel, the tightly closed space in which the reaction solution is held, and the nozzle tip fitting space can be formed in the reaction vessel main body and the cover member by a puncture needle provided perpendicular or substantially perpendicular to the surface on which the reaction vessel is placed.

(26) In a twenty-fifth aspect of the reaction vessel of the present invention, the nozzle tip fitting space is formed such that the mounting direction of the nozzle tip with respect to the nozzle tip fitting space is perpendicular or substantially perpendicular to the surface on which the reaction vessel is placed.

With the reaction vessel pertaining to this aspect, the force exerted on the reaction vessel by the nozzle tip in the mounting of the nozzle tip in the nozzle tip fitting space is a force that is perpendicular or substantially perpendicular to the surface on which the reaction vessel is placed. Therefore, the nozzle tip can be easily mounted in the nozzle tip fitting space without the reaction vessel shifting its position while the nozzle tip is being mounted in the nozzle tip fitting space.

(27) In a twenty-sixth aspect of the reaction vessel of the present invention, the cover member has an outer peripheral surface capable of fitting snugly against the inner peripheral surface of the reaction chamber.

With the reaction vessel pertaining to this aspect, the outer peripheral surface of the cover member fits snugly against the inner peripheral surface of the reaction chamber, the result of which is that the tightly closed space in which the reaction solution is held is closed off more effectively. Therefore, the intake and discharge force of the nozzle can be transmitted more efficiently to the outside of the reaction vessel.

(28) In a twenty-seventh aspect of the reaction vessel of the present invention, a concave component and/or a convex component is provided on the inner peripheral surface of the reaction chamber, and a convex component and/or a concave component capable of mating with the concave component and/or the convex component provided on the inner peripheral surface of the reaction chamber is provided on the outer peripheral surface of the cover member.

With the reaction vessel pertaining to this aspect, the cover member covers the reaction vessel main body more securely, so even if the reaction vessel is moved while the cover member is mounted on the reaction vessel main body (such as when the cover member is supported, but not the reaction vessel main body, while the reaction vessel is moved), the cover member will not come off the reaction vessel main body. Therefore, it is possible to move the reaction vessel while the cover member is mounted on the reaction vessel main body, by moving the nozzle on which is mounted the nozzle tip in the nozzle tip fitting space.

(29) In a twenty-eighth aspect of the reaction vessel of the present invention, the reaction vessel is a reaction vessel for PCR.

With the reaction vessel pertaining to this aspect, the reaction occurring in the reaction chamber is a PCR, and the reaction solution held in the reaction chamber is a reaction solution for PCR. PCR reaction solutions include H₂O, buffers, MgCl₂, dNTP mixes, primers, template DNA, Taq polymerase, and so forth, and PCR amplified fragments (such as DNA fragments) are contained as the reaction product in the PCR reaction solution after the reaction.

With PCR, the temperature of the reaction solution must be controlled over time or periodically, and since the temperature of a reaction solution can be controlled rapidly with the reaction vessel of the present invention, the time required by a PCR can be reduced by using the reaction vessel of the present invention as a PCR reaction vessel. Also, PCR is a technique involving the amplification of extremely small amounts of template DNA, so contamination with other DNA is a serious problem, but since contamination of the reaction solution is prevented with the reaction vessel of the present invention, the desired PCR can be performed accurately by using the reaction vessel of the present invention as a PCR reaction vessel. Furthermore, since evaporation of the reaction solution held in the reaction chamber is suppressed with the reaction vessel of the present invention, a PCR can be conducted with only a tiny amount of PCR reaction solution by using the reaction vessel of the present invention as a PCR reaction vessel. In addition, the progress of a PCR can be monitored in real time by using reaction vessel of the present invention as a PCR reaction vessel.

When the reaction vessel pertaining to this aspect is utilized, a series of operations comprising the preparation of samples containing target nucleic acids (such as extraction of nucleic acids from cells), amplification of these target nucleic acids by PCR, and monitoring (detection, measurement, qualitative analysis, quantitative analysis, etc.) of the progress of the PCR (such as whether or not the target nucleic acids have been amplified, or the amount of PCR amplification product) can be automated.

(30) In order to achieve the stated objects, the first reaction apparatus of the present invention is a reaction apparatus comprising the reaction vessel pertaining to the first aspect, a temperature controller, a light source, and a fluorescent light detector, wherein the temperature controller is attached to the cover member and/or the reaction vessel main body so that temperature of the reaction solution held in the reaction chamber can be controlled through the contact surface of the cover member and/or the contact surface of the reaction chamber, the light source is provided so that the reaction solution held in the reaction chamber can be irradiated with light through the contact surface of the cover member and/or the contact surface of the reaction chamber, and the fluorescent light detector is provided so that fluorescent light emitted from the reaction solution held in the reaction chamber can be detected through the contact surface of the cover member and/or the contact surface of the reaction chamber.

With the first reaction apparatus of the present invention, the temperature controller is attached to the cover member and/or the reaction vessel main body, and the temperature of the reaction solution can be rapidly controlled by the movement of heat through the contact surface of the cover member and/or the contact surface of the reaction chamber. The temperature controller may be attached directly to the cover member and/or the reaction vessel main body, or it may be attached via another member. For instance, with the reaction vessel of the present invention, if a heat-conducting metal block or heat-conducting metal plate is provided so as to be in contact with the reaction vessel main body and/or the cover member, the temperature controller can be attached to the cover member and/or the reaction vessel main body via the heat-conducting metal block or heat-conducting metal plate. With the first reaction apparatus of the present invention, the temperature controller may be attached to just the cover member or just the reaction vessel main body, or to both, but from the standpoint of rapidly controlling the temperature of the reaction solution, it is preferably attached to both the cover member and the reaction vessel main body.

With the first reaction apparatus of the present invention, the light source can irradiate the reaction solution held in the reaction chamber with excitation light through the contact surface of the cover member and/or the contact surface of the reaction chamber.

Also, with the first reaction apparatus of the present invention, the fluorescent light detector can detect fluorescent light emitted from the reaction solution held in the reaction chamber through the contact surface of the cover member and/or the contact surface of the reaction chamber.

With the first reaction apparatus of the present invention, the irradiation of the reaction solution with the excitation light and the detection of the fluorescent light emitted from the reaction solution can be performed by combining as desired the contact surface of the cover member and the contact surface of the reaction chamber. Specifically, the irradiation of the reaction solution with the excitation light and the detection of the fluorescent light emitted from the reaction solution can both be performed through the contact surface of the cover member, or both through the contact surface of the reaction chamber, or respectively through the contact surface of the cover member and the contact surface of the reaction chamber, or respectively through the contact surface of the reaction chamber and the contact surface of the cover member.

With the first reaction apparatus of the present invention, the reaction solution can be irradiated with excitation light and the fluorescent light emitted from the reaction solution can be detected while the reaction solution is still inside the reaction chamber. Therefore, if a fluorescent material that will serve as an index of the reaction progress is added ahead of time to the reaction solution, then the progress of the reaction can be monitored by detecting the light emitted by the fluorescent material during the course of the reaction. In particular, with the first reaction apparatus of the present invention, the temperature of the reaction solution held in the reaction chamber can be rapidly controlled and the progress of the reaction occurring in the reaction chamber can be monitored in real time (that is, instantly during the course of the reaction) while the reaction is proceeding.

(31) In a first aspect of the first reaction apparatus of the present invention, the temperature controller is attached to the wall component of substantially uniform thickness that constitutes the cover member and that has the contact surface of the cover member, and/or the wall component of substantially uniform thickness that constitutes the reaction vessel main body and that has the contact surface of the reaction chamber.

With the first reaction apparatus pertaining to this aspect, the temperature of the reaction solution held in the reaction chamber can be controlled through the wall component of substantially uniform thickness having the contact surface of the cover member, and/or the wall component of substantially uniform thickness having the contact surface of the reaction chamber, which means that the temperature of the reaction solution can be controlled rapidly and efficiently. The temperature control conditions here can also be set more easily.

Also, the irradiation of the reaction solution held in the reaction chamber with the excitation light and the detection of the fluorescent light from the reaction solution can be performed through the wall component of substantially uniform thickness having the contact surface of the cover member, and/or the wall component of substantially uniform thickness having the contact surface of the reaction chamber, which means that the excitation light irradiation conditions and fluorescent light reception conditions can be set more easily. In particular, if all or part of the contact surface of the cover member or the contact surface of the reaction chamber is flat, this wall component will be in the form of a flat plate, so the contact surface of the cover member or the contact surface of the reaction chamber at this wall component is substantially parallel to the opposite surface, which means that excitation light irradiation conditions and fluorescent light reception conditions can be set even more easily.

With the first reaction apparatus pertaining to this aspect, the temperature controller may be attached directly to the above-mentioned wall component, or it may be attached via another member. For instance, if a heat-conducting metal block or heat-conducting metal plate is provided so as to be in contact with the wall component, the temperature controller can be attached via the heat-conducting metal block or heat-conducting metal plate.

(32) In a second aspect of the first reaction apparatus of the present invention, the reaction vessel is the reaction vessel pertaining to the twelfth aspect, the temperature controller is attached to the cover member and/or the reaction vessel main body so that temperature of the reaction solution held in the reaction chamber can be controlled through the contact surface of the cover member and/or the opposing surface of the reaction chamber, the light source is provided so that the reaction solution held in the reaction chamber can be irradiated with light through the enveloping surface of the reaction chamber, and the fluorescent light detector is provided so that fluorescent light emitted from the reaction solution held in the reaction chamber can be detected through the enveloping surface of the reaction chamber.

With the first reaction apparatus pertaining to this aspect, the progress of the reaction occurring in the reaction chamber can be monitored in real time by irradiating the reaction solution with excitation light and detecting the fluorescent light emitted from the reaction solution through the enveloping surface of the reaction chamber while rapidly controlling the temperature of the reaction solution held in the reaction chamber by the movement of heat through the contact surface of the cover member and/or the opposing surface of the reaction chamber. In particular, with the first reaction apparatus pertaining to this aspect, since the surface utilized for controlling the temperature of the reaction solution (the contact surface of the cover member and/or the opposing surface of the reaction chamber) is separate from the surface utilized for monitoring the progress of the reaction (the enveloping surface of the reaction chamber), the region where the reaction progress is monitored can be set freely, and it is also possible to monitor the reaction progress for the entire reaction solution.

(33) In a third aspect of the first reaction apparatus of the present invention, the temperature controller is attached to the wall component of substantially uniform thickness that constitutes the cover member and that has the contact surface of the cover member, and/or the wall component of substantially uniform thickness that constitutes the reaction vessel main body and that has the opposing surface of the reaction chamber.

With the first reaction apparatus pertaining to this aspect, the temperature of the reaction solution held in the reaction chamber can be controlled through the wall component of substantially uniform thickness having the contact surface of the cover member, and/or the wall component of substantially uniform thickness having the opposing surface of the reaction chamber, which means that the temperature of the reaction solution can be controlled rapidly and efficiently. The temperature control conditions here can also be set easily.

Also, the irradiation of the reaction solution held in the reaction chamber with the excitation light and the detection of fluorescent light from the reaction solution can be performed through the wall component of substantially uniform thickness having the contact surface of the cover member and/or the wall component of substantially uniform thickness having the opposing surface of the reaction chamber, which means that the excitation light irradiation conditions and the fluorescent light reception conditions can be set more easily. Particularly when all or part of the contact surface of the cover member or the opposing surface of the reaction chamber is flat, this wall component is also flat, so the contact surface of the cover member at this wall component is substantially parallel to the opposite surface, or the opposing surface of the reaction chamber is substantially parallel to the opposite surface, which means that excitation light irradiation conditions and fluorescent light reception conditions can be set even more easily.

With the first reaction apparatus pertaining to this aspect, the temperature controller may be attached directly to the above-mentioned wall component, or it may be attached via another member. For instance, if a heat-conducting metal block or heat-conducting metal plate is provided so as to be in contact with the wall component, the temperature controller can be attached via the heat-conducting metal block or heat-conducting metal plate.

(34) In a fourth aspect of the first reaction apparatus of the present invention, the reaction apparatus further comprises a plurality of optical fibers disposed around the enveloping surface of the reaction chamber, wherein the irradiation of the reaction solution with light from the light source and/or the detection of fluorescent light emitted from the reaction solution is accomplished by utilizing the optical fibers.

With the first reaction apparatus pertaining to this aspect, the optical fibers are, for example, disposed around that surface of the wall component constituting the cover member and having the enveloping surface of the reaction chamber, that is opposite from the enveloping surface of the reaction chamber. If all or part of the enveloping surface of the reaction chamber is flat and the thickness of the wall component having the enveloping surface of the reaction chamber is substantially uniform, this wall component will be in the form of a flat plate, so the enveloping surface of the reaction chamber at this wall component is substantially parallel to the opposite surface, which means that excitation light irradiation conditions and fluorescent light reception conditions can be set even more easily if the optical fibers are disposed perpendicular to the wall component having the enveloping surface of the reaction chamber.

When a plurality of optical fibers are used to irradiate the reaction solution with light and to detect fluorescent light from the reaction solution, since the irradiation surface area of each optical fiber is small, the area excited by each optical fiber will also be small, and the intensity of the fluorescent light emitted from this area will be weak, if the distance the irradiation light is transmitted through the reaction solution is too short. Therefore, the detection sensitivity of each optical fiber will be low if the optical fibers are used in the irradiation of reaction solution present in the form of a thin layer between the contact surface of the cover member and the opposing surface of the reaction chamber with excitation light through the contact surface of the cover member and/or the opposing surface of the reaction chamber.

In contrast, if reaction solution present in the form of a thin layer between the contact surface of the cover member and the opposing surface of the reaction chamber is irradiated with excitation light through the enveloping surface of the reaction chamber, even though the irradiation surface area of each optical fiber is small, the distance the irradiation light travels through the reaction solution is longer, so the area excited by each optical fiber is larger and the intensity of fluorescent light emitted from that area is higher. Therefore, the detection sensitivity of the optical fibers is higher.

Accordingly, with the reaction vessel pertaining to this aspect, the progress of the reaction in a reaction solution present in the form of a thin layer between the contact surface of the cover member and the opposing surface of the reaction chamber can be monitored with good sensitivity by using optical fibers.

With the first reaction apparatus pertaining to this aspect, either the irradiation of the reaction solution with light from the light source or the detection of the fluorescent light emitted from the reaction solution, or both, may be performed with a single optical fiber. Also, the optical fibers utilized for irradiating the reaction solution with light from the light source and the optical fibers utilized for detecting the fluorescent light emitted from the reaction solution can be disposed as desired around the enveloping surface of the reaction chamber. Also, the type of irradiation light and the type of detected fluorescent light may be the same for all of the optical fibers, or may vary with each optical fiber or by optical fiber group.

With the first reaction apparatus pertaining to this aspect, if the reaction solution held in the reaction chamber is made ahead of time to contain a plurality of different fluorescent dyes, and irradiation with excitation light corresponding to each fluorescent dye and the detection of the fluorescent light emitted from each fluorescent dye are performed by individual optical fiber or by optical fiber group, then different reactions can be conducted at the same time, and the progress of the reactions (such as whether or not the target nucleic acids have been amplified, or the amount of PCR amplification product) can be monitored in real time. Also, if the same excitation light is emitted and the same fluorescent light detected by a plurality of optical fibers, then the progress of the reaction can be monitored for the entire reaction solution by disposing the optical fibers all the way around the enveloping surface of the reaction chamber.

(35) In order to achieve the stated objects, the second reaction apparatus of the present invention is a reaction apparatus comprising a reaction vessel installation part in which the reaction vessel pertaining to the seventeenth or eighteenth aspect, a first temperature controller, a second temperature controller, a light source, and a fluorescent light detector, wherein the first temperature controller is provided so that the temperature of the reaction solution held in the tightly closed space of the reaction vessel installed in the reaction vessel installation part can be controlled through the contact surface of the reaction chamber, the second temperature controller is removably mounted in the nozzle tip fitting space of the cover member and provided so that the temperature of the reaction solution held in the tightly closed space of the reaction vessel installed in the reaction vessel installation part can be controlled through the contact surface of the cover member, the light source is provided so that the reaction solution held in the tightly closed space of the reaction vessel installed in the reaction vessel installation part can be irradiated with light through the contact surface of the cover member and/or the contact surface of the reaction chamber, and the fluorescent light detector is provided so that fluorescent light emitted from the reaction solution held in the tightly closed space of the reaction vessel installed in the reaction vessel installation part can be detected through the contact surface of the cover member and/or the contact surface of the reaction chamber.

With the second reaction apparatus pertaining to this aspect, the reaction vessel before the reaction is placed in the reaction vessel installation part, and the temperature of the reaction solution held in the tightly closed space inside the reaction vessel is controlled by the first and second temperature controllers. The first and second temperature controllers are, for example, equipped with a heat-conducting metal block or heat-conducting metal plate provided so as to be in contact with the reaction vessel main body or the cover member, with the first temperature controller controlling the temperature of the reaction solution through the contact surface of the reaction chamber, and the second temperature controller controlling the temperature of the reaction solution through the contact surface of the cover member. The second temperature controller is designed so that it can be mounted in and removed from the nozzle tip fitting space of the cover member, and is mounted in the nozzle tip fitting space during the reaction, and removed from the nozzle tip fitting space after the reaction.

With the second reaction apparatus pertaining to this aspect, the reaction solution can be irradiated with excitation light from the light source through the contact surface of the cover member and/or the contact surface of the reaction chamber, and the fluorescent light emitted from the reaction solution can be detected by the fluorescent light detector through the contact surface of the cover member and/or the contact surface of the reaction chamber. As a result, the progress of the reaction occurring in the reaction solution can be monitored in real time (that is, instantly during the course of the reaction) while the desired reaction is being conducted by controlling the temperature of the reaction solution.

(36) In a first aspect of the second reaction apparatus of the present invention, the reaction vessel is the reaction vessel pertaining to the eighteenth aspect, the first temperature controller is provided so that the temperature of the reaction solution held in the tightly closed space of the reaction vessel installed in the reaction vessel installation part can be controlled through the opposing surface of the reaction chamber, the light source is provided so that the reaction solution held in the tightly closed space of the reaction vessel installed in the reaction vessel installation part can be irradiated with light through the enveloping surface of the reaction chamber, and the fluorescent light detector is provided so that fluorescent light emitted from the reaction solution held in the tightly closed space of the reaction vessel installed in the reaction vessel installation part can be detected through the enveloping surface of the reaction chamber.

With the second reaction apparatus pertaining to this aspect, the progress of the reaction occurring in the reaction chamber can be monitored in real time by irradiating the reaction solution with the excitation light and detecting the fluorescent light from the reaction solution through the enveloping surface of the reaction chamber while rapidly controlling the temperature of the reaction solution by the movement of heat through the contact surface of the cover member and the opposing surface of the reaction chamber. In particular, with the second reaction apparatus pertaining to this aspect, since the surface utilized for controlling the temperature of the reaction solution (the contact surface of the cover member and the opposing surface of the reaction chamber) is separate from the surface utilized for monitoring the progress of the reaction (the enveloping surface of the reaction chamber), the region where the reaction progress is monitored can be set freely, and it is also possible to monitor the reaction progress for the entire reaction solution.

(37) In a second aspect of the second reaction apparatus of the present invention, the reaction apparatus further comprises a plurality of optical fibers disposed around the enveloping surface of the reaction chamber, wherein the irradiation of the reaction solution with light from the light source and/or the detection of fluorescent light emitted from the reaction solution is accomplished by utilizing the optical fibers.

With the second reaction apparatus pertaining to this aspect, detection of the fluorescent light with the optical fibers can be carried out in the same manner as with the first reaction apparatus pertaining to the fourth aspect, and the same effect can be obtained as with the first reaction apparatus pertaining to the fourth aspect.

(38) In a third aspect of the second reaction apparatus of the present invention, the reaction apparatus further comprises a temperature controller mounting and removing part for mounting and removing the second temperature controller in the nozzle tip fitting space, wherein the temperature controller mounting and removing part performs an operation for mounting the second temperature controller in the nozzle tip fitting space prior to the reaction, and operation for removing the second temperature controller from the nozzle tip fitting space after the reaction.

(39) In a fourth aspect of the second reaction apparatus of the present invention, the reaction apparatus further comprises a puncture vessel installation part in which a puncture vessel is installed, a nozzle capable of the intake and discharge of a liquid, and a nozzle transfer part, wherein the puncture vessel comprises a liquid holding space capable of holding a liquid, an opening that leads to the liquid holding space, and a puncture needle, the liquid holding space is formed so that the reaction vessel can be accommodated in the liquid holding space through the opening, the puncture needle is provided so as to protrude into the liquid holding space from the wall component of the puncture vessel forming the liquid holding space, the nozzle transfer part performs an operation for fitting the nozzle tip mounted on the nozzle in the nozzle tip fitting space of the reaction vessel installed in the reaction vessel installation part, operation for transferring the reaction vessel with the mounted nozzle tip fitted thereinto to the puncture vessel installation part, and operation for accommodating the reaction vessel in the liquid holding space of the puncture vessel installed puncture vessel installation part, and for forming in the cover member and the reaction vessel main body, by means of the puncture needle provided in the puncture vessel, a through-hole that communicates with the nozzle tip fitting space, the tightly closed space of the reaction vessel, and the liquid holding space of the puncture vessel, and the nozzle performs an operation for extracting the reaction solution held in the tightly closed space of the reaction vessel into the liquid held in the liquid holding space of the puncture vessel, by the intake and discharge of the liquid through the through-hole.

With the second reaction apparatus pertaining to this aspect, the nozzle is moved by the nozzle transfer part, and the nozzle tip mounted on the nozzle is mounted in the nozzle tip fitting space of the reaction vessel placed in the reaction vessel installation part after the reaction. After the mounting of the nozzle tip in the nozzle tip fitting space, the nozzle is moved by the nozzle transfer part, and the reaction vessel is moved from the reaction vessel installation part to the puncture vessel installation part. The nozzle is then moved by the nozzle transfer part, and the reaction vessel is placed in the liquid holding space of the puncture vessel placed in the puncture vessel installation part. Here, the reaction vessel is pressed against the puncture needle provided to the puncture vessel, so that the puncture needle forms the desired through-hole (that is, a through-hole communicating between the liquid holding space of the puncture vessel, the tightly closed space in which the reaction solution is held, and the nozzle tip fitting space) in the cover member and the reaction vessel main body. The intake and discharge by the nozzle are then commenced, and the liquid held in the liquid holding space of the puncture vessel is taken in and discharged through the above-mentioned through-hole. The repeated intake and discharge by the nozzle cause the reaction solution held in the tightly closed space of the reaction vessel to be extracted into the above-mentioned liquid. Along with the extraction of the reaction solution, the reaction product contained in the reaction solution is also extracted into the liquid.

Thus, if the second reaction apparatus pertaining to this aspect is utilized, the reaction product contained in the reaction solution inside the reaction vessel can be acquired without removing the cover member from the reaction vessel main body after the reaction has been conducted while the reaction vessel main body is covered by the cover member.

With the second reaction apparatus pertaining to this aspect, the nozzle may have any structure that allows the liquid to be taken in and discharged, but an example of a nozzle that can be used is one having the same structure as the nozzle utilized in a conventional dispensing apparatus. The nozzle transfer part may also have any structure that allows the required operations to be carried out.

The operation for mounting the nozzle tip in the nozzle tip fitting space is performed after the operation for removing the second temperature controller from the nozzle tip fitting space. Also, the operation for mounting the nozzle tip in the nozzle tip fitting space is controlled so as not to interfere with the operation for removing the second temperature controller from the nozzle tip fitting space.

(40) In a fifth aspect of the first and second reaction apparatus of the present invention, the reaction apparatus is a reaction apparatus for PCR.

With the reaction apparatus pertaining to this aspect, the reaction occurring in the reaction chamber is a PCR, and the reaction solution held in the reaction chamber is a PCR reaction solution. With the reaction apparatus pertaining to this aspect, the progress of the PCR in the reaction chamber (such as whether or not the target nucleic acids have been amplified, or the amount of PCR amplification product) can be monitored in real time, while the PCR is conducted in less time by rapidly controlling the temperature of the PCR reaction solution.

The reaction apparatus pertaining to this aspect makes possible the automation of a series of operations comprising the preparation of samples containing target nucleic acids (such as extraction of nucleic acids from cells), amplification of these target nucleic acids by PCR, and monitoring (detection, measurement, qualitative analysis, quantitative analysis, etc.) of the progress of the PCR (such as whether or not the target nucleic acids have been amplified, or the amount of PCR amplification product).

(41) In order to achieve the stated objects, the method of the present invention comprises the steps of (a) bringing the reaction solution held in the reaction chamber into contact with a contact member, (b) controlling the temperature of the reaction solution through the contact surface between the reaction solution and the reaction chamber and/or the contact surface between the reaction solution and the contact member, (c) irradiating the reaction solution with light through the contact surface between the reaction solution and the reaction chamber and/or the contact surface between the reaction solution and the contact member, and (d) detecting fluorescent light emitted from the reaction solution through the contact surface between the reaction solution and the reaction chamber and/or the contact surface between the reaction solution and the contact member.

With the method of the present invention, step (b) is preferably performed after step (a). This allows the temperature of the reaction solution to be controlled rapidly through the contact surface between the reaction solution and the reaction chamber and the contact surface between the reaction solution and the contact member. The control of the reaction solution temperature through the contact surface between the reaction solution and the reaction chamber in step (b) can be carried out before step

### (a) or simultaneously with step (a).

With the method of the present invention, step (c) and step (d) are preferably performed after step (a). This allows the progress of the reaction to be monitored while the reaction proceeds by rapidly controlling the temperature of the reaction solution. The irradiation of the reaction solution with light through the contact surface between the reaction solution and the reaction chamber in step (c), and the detection of the fluorescent light emitted from the fluorescent light through the contact surface between the reaction solution and the reaction chamber in step (d) can be carried out before step (a) or simultaneously with step (a).

Also, with the method of the present invention, step (b), step (c), and step (d) are preferably carried out simultaneously. This allows the progress of the reaction to be monitored in real time while the reaction proceeds by rapidly controlling the reaction solution temperature.

The method of the present invention can be implemented, for example, by using the reaction vessel of the present invention or the reaction apparatus of the present invention.

(42) In a first aspect of the method of the present invention, the contact surface of the reaction chamber utilized for controlling the temperature of the reaction solution is different from the contact surface of the reaction chamber utilized for irradiating the reaction solution with light and/or the contact surface of the reaction chamber utilized for detecting fluorescent light from the reaction solution.

In the reaction pertaining to this aspect, of the surface where the reaction solution is in contact with the reaction solution (the contact surface of the reaction chamber), that surface utilized for controlling the temperature of the reaction solution (the surface utilized in step (b)) is separate from the surface utilized for monitoring the reaction progress (the surface utilized in step (c) and/or step (d)), which allows the temperature of the reaction solution to be controlled rapidly and also allows the region where the reaction progress is monitored to be set freely. It is also possible to monitor the reaction progress for the entire reaction solution.

(43) In a second aspect of the method of the present invention, a nozzle tip fitting space, into which a nozzle tip mounted on a nozzle capable of the intake and discharge of a liquid can be fitted, is formed in the contact member, and the method further comprises the steps of (e) forming a through-hole that communicates with the outside of the reaction chamber, the inside of the reaction chamber, and the nozzle tip fitting space by means of a puncture needle provided to the outside of the reaction chamber after completion of a reaction in the reaction chamber, (f) mounting the nozzle tip mounted to the nozzle in the nozzle tip fitting space, (g) bringing the outside of the reaction chamber into contact with a liquid, and (h) extracting the reaction solution held in the reaction chamber into the liquid by operating the nozzle and performing the intake and discharge of the liquid through the through-hole.

With the method pertaining to this aspect, steps (e), (f), and (g) can be performed in any order desired. Step (e) is performed after completion of the reaction in the reaction chamber, but steps (f) and (g) may be performed either before the reaction in the reaction chamber (including both before the reaction commences and during the course of the reaction), or may be performed after the reaction is complete. When the second reaction apparatus pertaining to the fourth aspect is utilized, of steps (e), (f), and (g), step (f) is performed first, and steps (e) and (g) are performed in any order desired. Step (h) is performed after steps (e), (f), and (g) have been performed.

(44) In a third aspect of the method of the present invention, the reaction occurring in the reaction chamber is a PCR.

With the method pertaining to this aspect, the reaction solution held in the reaction chamber is a PCR reaction solution. With the method pertaining to this aspect, the progress of the PCR in the reaction chamber (such as whether or not the target nucleic acids have been amplified, or the amount of PCR amplification product) can be monitored in real time, while the PCR is conducted in less time by rapidly controlling the temperature of the PCR reaction solution.

### BRIEF DESCRIPTION OF THE DRAWINGS

Fig. 1 is a cross section illustrating a first embodiment of the reaction vessel pertaining to the present invention;
Fig. 2 is a top view of the reaction vessel main body of the reaction vessel pertaining to the first embodiment;
Fig. 3 is a bottom view of the cover member pertaining to the first embodiment;
Fig. 4 is a cross section illustrating a state in which the cover member is mounted on the reaction vessel main body in the reaction vessel pertaining to the first embodiment;
Fig. 5 is a simplified partial cross section illustrating a first embodiment of the reaction apparatus pertaining to the present invention;
Figs. 6 (i) to (iii) are diagrams illustrating example layouts of the optical fibers (Fig. 6 (ii) corresponds to an A-A cross section of Fig. 5);
Fig. 7 is a cross section illustrating a second embodiment of the reaction vessel pertaining to the present invention;
Fig. 8 (i) is a cross section illustrating a state in which the cover member is mounted on the reaction vessel main body in the reaction vessel pertaining to the second embodiment, and Fig. 8 (ii) is a cross section illustrating a state in which the nozzle tip has been mounted on the cover member covering the reaction vessel main body in the reaction vessel pertaining to the second embodiment;
Fig. 9 is a partial cross section illustrating a second embodiment of the reaction apparatus pertaining to the present invention;
Fig. 10 (i) is an exploded oblique view illustrating the structure of the first temperature controller and second temperature controller provided to the reaction apparatus pertaining to the second embodiment, and Fig. 10 (ii) is an oblique view illustrating the state of the first temperature controller and second temperature controller during a reaction;
Fig. 11 is a cross section illustrating the state near the reaction vessel during a reaction in the reaction apparatus pertaining to the second embodiment; and
Fig. 12 is a partial cross section illustrating the operation up to the reaction product extraction of the reaction apparatus pertaining to the second embodiment.

### BEST MODE FOR CARRYING OUT THE INVENTION

Embodiments of the present invention will now be described through reference to the drawings.

### First Embodiment

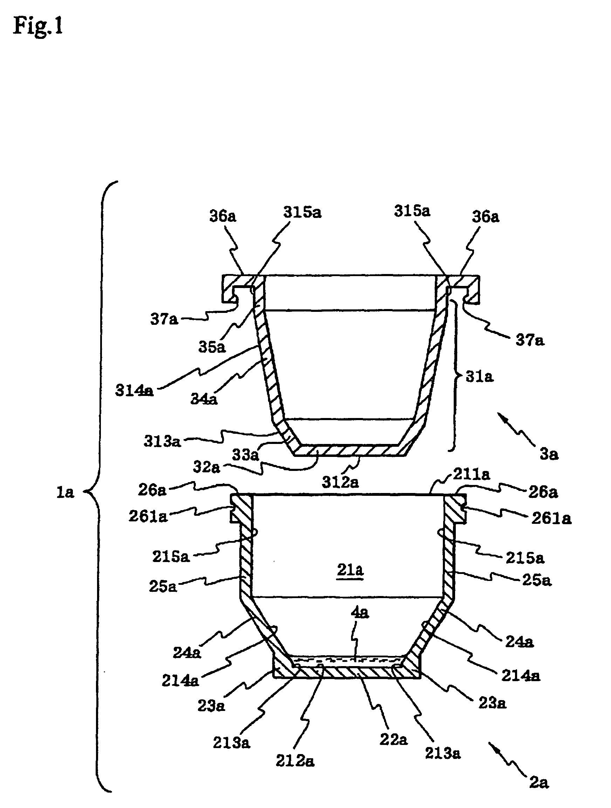

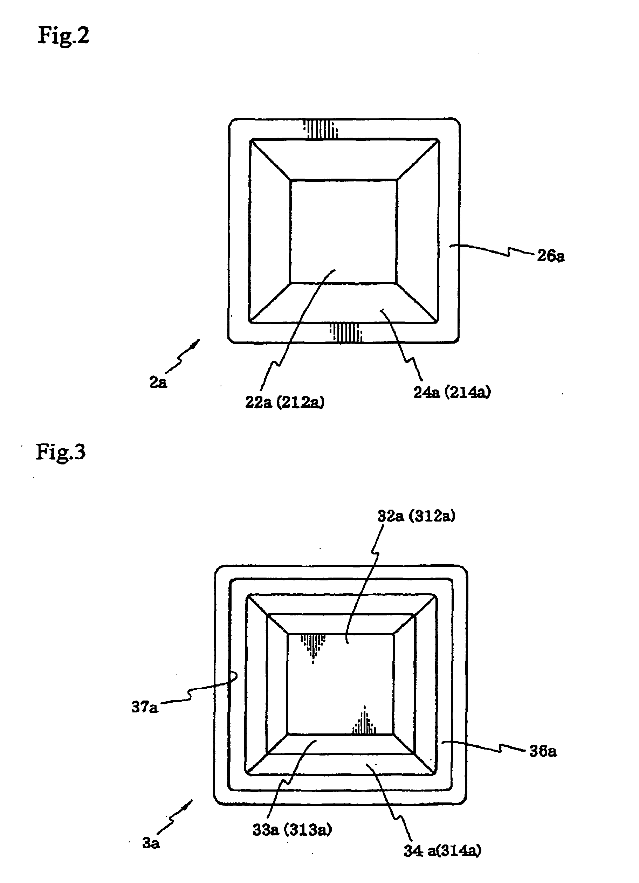

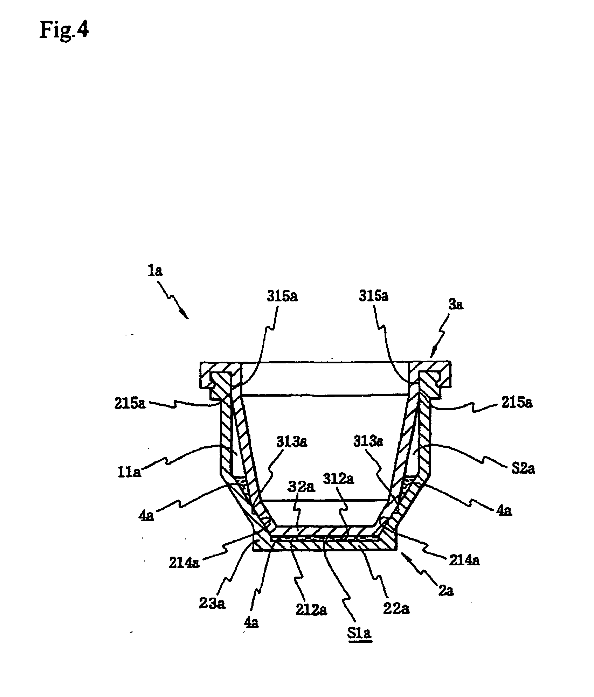

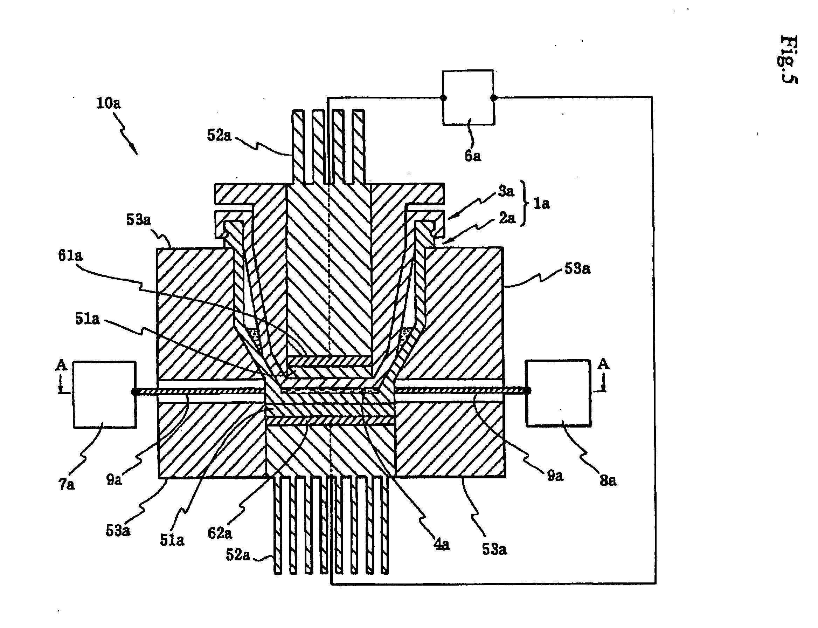

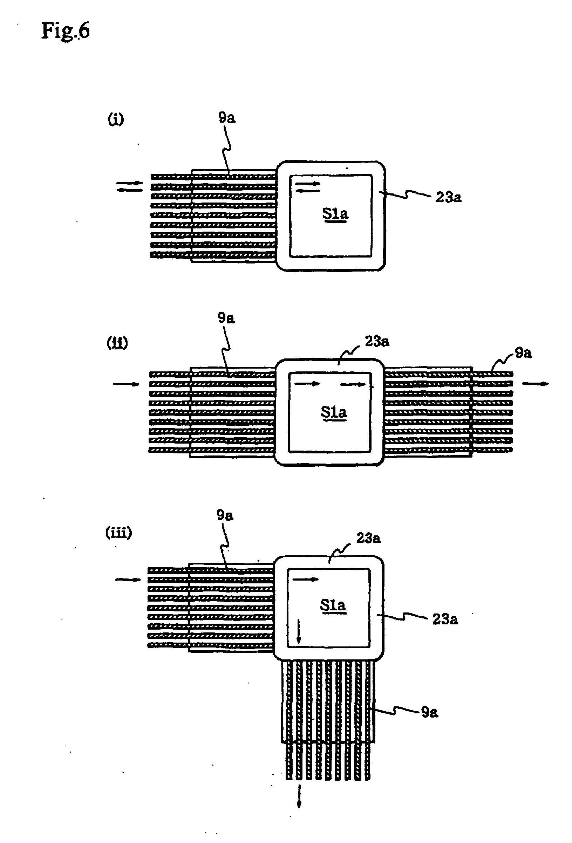

Fig. 1 is a cross section illustrating a first embodiment of the reaction vessel pertaining to the present invention, Fig. 2 is a top view of the reaction vessel main body of the reaction vessel pertaining to the first embodiment, Fig. 3 is a bottom view of the cover member pertaining to the first embodiment, Fig. 4 is a cross section illustrating a state in which the cover member is mounted on the reaction vessel main body in the reaction vessel pertaining to the first embodiment, Fig. 5 is a simplified partial cross section illustrating a first embodiment of the reaction apparatus pertaining to the present invention, and Figs. 6 (i) to (iii) are diagrams illustrating example layouts of the optical fibers.

As shown in Figs. 1 and 4, the reaction vessel 1a pertaining to this embodiment comprises a reaction vessel main body 2a and a cover member 3a.

As shown in Figs. 1 and 2, the reaction vessel main body 2a has a bottom plate 22a that is quadrangular in plan view, a first side plate 23a in the form of an angular cylinder that rises up from the edges of the bottom plate 22a while maintaining the same diameter, a second side plate 24a in the form of an angular cylinder that rises up from the top edge of the first side plate 23a while gradually expanding in diameter, a third side plate 25a in the form of an angular cylinder that rises up from the top edge of the second side plate 24a while maintaining the same diameter, and a lip 26a provided at the top edge of the third side plate 25a.

As shown in Fig. 2, a lateral cross section of the first side plate 23a, second side plate 24a, and third side plate 25a is quadrangular, with an inner peripheral surface 213a of the first side plate 23a, an inner peripheral surface 214a of the second side plate 24a, and an inner peripheral surface 215a of the third side plate 25a each consisting of four planes. This quadrangular shape includes both rectangular and square.

As shown in Fig. 1, a concave component 261a is provided to the lip 26a of the reaction vessel main body 2a, and when the cover member 3a is mounted on the reaction vessel main body 2a, as shown in Fig. 4, the concave component 261a of the reaction vessel main body 2a fits together with a convex component 37a of the cover member 3a, so that the cover member 3a is fixed to the reaction vessel main body 2a.

As shown in Fig. 1, the reaction vessel main body 2a is equipped with a reaction chamber 21a that has an opening 211a at its upper end and is capable of holding the reaction solution 4a. As shown in Fig. 1, the reaction chamber 21a is formed in the reaction vessel main body 2a as a concave component having an opening 211a at its upper end. The reaction chamber 21a is a concave component formed by the bottom plate 22a, the first side plate 23a, the second side plate 24a, and the third side plate 25a. The upper surface 212a of the bottom plate 22a corresponds to the bottom surface of the reaction chamber 21a, and the inner peripheral surface 231a of the first side plate 23a, the inner peripheral surface 214a of the second side plate 24a, and the inner peripheral surface 215a of the third side plate 25a correspond to the inner peripheral surface of the reaction chamber 21a.

As shown in Fig. 1, the opening area of the opening 211a of the reaction chamber 21a is somewhat larger than the surface area of the bottom surface of the reaction chamber 21a, and the structure is such that the reaction solution 4a added through the opening 211a easily reaches the bottom surface of the reaction chamber 21a all by itself (without any downward force other than gravity being applied to the reaction solution 4a). Depending on how the reaction solution 4a is added, it may adhere to the inner peripheral surface of the reaction chamber 21a, in which case the reaction solution 4a can be made to reach the bottom of the reaction chamber 21a by using a vortex mixer or the like to vibrate the reaction vessel main body 2a.

As shown in Fig. 1, the bottom plate 22a, the first side plate 23a, the second side plate 24a, and the third side plate 25a have a substantially uniform thickness. "Substantially uniform thickness" includes a thickness that is uniform. The thickness of the various plates can be varied as needed, but the bottom plate 22a is preferably a thin plate from the standpoint of rapidly controlling the temperature of the reaction solution 4a held in the reaction chamber 21a. Also, it is preferable for the first side plate 23a to be a thin plate because it will be easier to set the conditions for irradiating the reaction solution 4a held in the reaction chamber 21a with excitation light and the conditions for detecting the fluorescent light emitted from the reaction solution 4a. The thickness of the thin plates can be suitably determined according to the material of which the thin plates are made and other factors, but about 0.1 to 0.5 mm is preferable in the case of a plastic, for example.

As shown in Fig. 1, the reaction vessel main body 2a is only equipped with one reaction chamber 21a, but the number of reaction chambers and their location in the reaction vessel main body can be varied as needed. For instance, the reaction vessel main body may be equipped with eight reaction chambers aligned in a row, or may be equipped with 8 longitudinal rows x 12 lateral rows for a total of 96 reaction chambers. Sample processing can be carried out more efficiently if the reaction vessel main body is equipped with a plurality of reaction chambers. For example, a sample dispensing apparatus comprising an eight-head nozzle unit is commercially available, if the reaction vessel main body is equipped with eight reaction chambers in a row, this sample dispensing apparatus can be utilized to automate the dispensing of the reaction solution into the reaction chambers.

As shown in Fig. 1, when the reaction vessel main body 2a is not yet covered by the cover member 3a, the reaction solution 4a held in the reaction chamber 21a is in contact with the bottom surface and the inner peripheral surface of the reaction chamber 21a.

As shown in Fig. 1, the cover member 3a has a convex component 31a protruding downward, and a flat plate 36a provided to the top end of the convex component 31a.

As shown in Fig. 1, a lip protruding downward is provided to the peripheral edge of the flat plate 36a, and a convex component 37a that protrudes in the direction of the convex component 31a is provided to the bottom end of this lip. When the reaction vessel main body 2a is covered by the cover member 3a, as shown in Fig. 4, the convex component 37a of the cover member 3a fits into the concave component 261a of the reaction vessel main body 2a so that the cover member 3a is fixed to the reaction vessel main body 2a.

As shown in Figs. 1 and 3, the convex component 31a comprises the pressing part 32a comprising a flat plate that is quadrangular in plan view, a first side plate 33a in the form of an angular cylinder that rises up from the edges of the pressing part 32a so as to gradually increase in diameter, a second side plate 34a in the form of an angular cylinder that rises up from the top end of the first side plate 33a so as to gradually increase in diameter, and a third side plate 35a in the form of an angular cylinder that rises up from the top end of the second side plate 34a so as to maintain the same diameter. The convex component 31a is contiguous with the flat plate 36a at the top end of the third side plate 35a.

As shown in Fig. 3, a lateral cross section of the first side plate 33a, the second side plate 34a, and the third side plate 35a is quadrangular, with an outer peripheral surface 313a of the first side plate 33a, an outer peripheral surface 314a of the second side plate 34a, and an outer peripheral surface 315a of the third side plate 35a each consisting of four planes. This quadrangular shape includes both rectangular and square.

As shown in Fig. 1, the pressing part 32a, the first side plate 33a, the second side plate 34a, and the third side plate 35a have a substantially uniform thickness. "Substantially uniform thickness" includes a thickness that is uniform. The thickness of the various plates can be varied as needed, but the pressing part 32a is preferably a thin plate from the standpoint of rapidly controlling the temperature of the reaction solution 4a held in the reaction chamber 21a. The thickness of the thin plates can be suitably determined according to the material of which the thin plates are made and other factors, but about 0.1 to 0.5 mm is preferable in the case of a plastic, for example.

As shown in Figs. 1 and 3, the cover member 3a only has one convex component 31a, but the number of convex components and their location in the cover member can be varied as needed according to the number and locations of the reaction chambers had by the reaction vessel main body.

The convex component 31a is provided to the cover member 3a so as to fit into the reaction chamber 21a formed as a concave component in the reaction vessel main body 2a, and when the reaction vessel main body 2a is covered by the cover member 3a, as shown in Fig. 4, the opening 211a of the reaction chamber 21a is sealed off by the cover member 3a.

The convex component 31a is provided so that the lower surface 312a of the pressing part 32a of the convex component 31a does not come into contact with the bottom surface of the reaction chamber 21a when the cover member 3a is mounted on the reaction vessel main body 2a. Therefore, when the cover member 3a covers the reaction vessel main body 2a, as shown in Fig. 4, a gap (tightly closed space S1a) is formed between the lower surface 312a of the pressing part 32a of the convex component 31a and the bottom surface of the reaction chamber 21a.

The pressing part 32a of the convex component 31a is provided so as to be opposed against the bottom plate 22a of the reaction vessel main body 2a when the cover member 3a is mounted on the reaction vessel main body 2a, and when the cover member 3a is placed over the reaction vessel main body 2a, as shown in Fiq. 4, the reaction solution 4a is held in the form of a thin layer between the lower surface 312a (contact surface of the cover member) of the pressing part 32a of the convex component 31a and the upper surface 212a (opposing surface of the reaction chamber) of the bottom plate 22a of the reaction vessel main body 2a.

At this point, the reaction solution 4a present in the form of a thin layer between the lower surface 312a (contact surface of the cover member) of the pressing part 32a of the convex component 31a and the upper surface 212a (opposing surface of the reaction chamber) of the bottom plate 22a of the reaction vessel main body 2a is in a state of being enveloped by the inner peripheral surface 213a (enveloping surface of the reaction chamber) of the first side plate 23a of the reaction vessel main body 2a. Specifically, when the cover member 3a is placed over the reaction vessel main body 2a, as shown in Fig. 4, the tightly closed space S1a is formed by the lower surface 312a (contact surface of the cover member) of the pressing part 32a of the convex component 31a, the upper surface 212a (opposing surface of the reaction chamber) of the bottom plate 22a of the reaction vessel main body 2a, and the inner peripheral surface 213a (enveloping surface of the reaction chamber) of the first side plate 23a of the reaction vessel main body 2a, and part of the reaction solution 4a is held in the form of a thin layer in this tightly closed space S1a.

As shown in Fig. 4, the reaction solution 4a held in the tightly closed space S1a is in contact with the lower surface 312a (contact surface of the cover member) of the pressing part 32a of the convex component 31a, the upper surface 212a (opposing surface of the reaction chamber) of the bottom plate 22a of the reaction vessel main body 2a, and the inner peripheral surface 213a (enveloping surface of the reaction chamber) of the first side plate 23a of the reaction vessel main body 2a.

The pressing part 32a of the convex component 31a is provided so as to press on the reaction solution 4a held in the reaction chamber 21a in the course of the cover member 3a being placed over the reaction vessel main body 2a, and this pressing by the pressing part 32a gradually pushes the reaction solution 4a to the upper part of the reaction chamber 21a. When the cover member 3a then covers the reaction vessel main body 2a, as shown in Fig. 4, the outer peripheral surface 313a of the first side plate 33a of the cover member 3a strikes the inner peripheral surface 214a of the second side plate 24a of the reaction vessel main body 2a. This limits the downward movement of the pressing part 32a, so that the distance remains constant between the lower surface 312a (contact surface of the cover member) of the pressing part 32a of the convex component 31a and the upper surface 212a (opposing surface of the reaction chamber) of the bottom plate 22a of the reaction vessel main body 2a. In this embodiment, the surface (abutting surface) when the cover member 3a and the reaction vessel main body 2a come together is in tapered form, but the abutting surface can also be, for example, a surface perpendicular to the direction in which the cover member is placed over the reaction vessel main body.

When the cover member 3a covers the reaction vessel main body 2a, as shown in Fig. 4, the outer peripheral surface 313a of the first side plate 33a of the cover member 3a fits snugly against the inner peripheral surface 214a of the second side plate 24a of the reaction vessel main body 2a, and the outer peripheral surface 315a of the third side plate 35a of the cover member 3a also fits snugly against the inner peripheral surface 215a of the third side plate 25a of the reaction vessel main body 2a. This keeps the tightly closed space S1a tightly closed, and also prevents contamination of the reaction solution 4a held in the tightly closed space S1a.

On the other hand, even when the reaction vessel main body 2a is covered by the cover member 3a, as shown in Fig. 4, the second side plate 34a of the cover member 3a does not fit snugly against the second side plate 24a or third side plate 25a of the reaction vessel main body 2a. Specifically, a tightly closed space S2a (surplus reaction solution holder) for holding any surplus reaction solution 4a that will not be held in the tightly closed space S1a is formed between the second side plate 34a of the cover member 3a and the second side plate 24a and third side plate 25a of the reaction vessel main body 2a.

When the pressing part 32a presses against the reaction solution 4a, any air inside the reaction chamber 21a, bubbles in the reaction solution 4a, and so forth are pushed along with the reaction solution 4a to the top part of the reaction chamber 21a and held in the tightly closed space S2a, and part thereof is discharged to outside the reaction chamber 21a, which prevents the admixture of air into the tightly closed space S1a and the admixture of bubbles into the reaction solution 4a held in the tightly closed space S1a.

The convex component 31a is provided so that the reaction solution 4a present between the lower surface 312a (contact surface of the cover member) of the pressing part 32a of the convex component 31a and the upper surface 212a (opposing surface of the reaction chamber) of the bottom plate 22a of the reaction vessel main body 2a is in the form of a thin layer when the cover member 3a is mounted on the reaction vessel main body 2a. Specifically, the convex component 31a is provided so that the distance between the lower surface 312a (contact surface of the cover member) of the pressing part 32a of the convex component 31a and the upper surface 212a (opposing surface of the reaction chamber) of the bottom plate 22a of the reaction vessel main body 2a is shortened when the cover member 3a is placed over the reaction vessel main body 2a.

The distance between the lower surface 312a (contact surface of the cover member) of the pressing part 32a of the convex component 31a and the upper surface 212a (opposing surface of the reaction chamber) of the bottom plate 22a of the reaction vessel main body 2a (that is, the thickness of the thin layer of reaction solution 4a) is preferably 0.1 to 0.5 mm. Also, distance between the lower surface 312a (contact surface of the cover member) of the pressing part 32a of the convex component 31a and the upper surface 212a (opposing surface of the reaction chamber) of the bottom plate 22a of the reaction vessel main body 2a (that is, the thickness of the thin layer of reaction solution 4a) is preferably the same at all locations.

The reaction vessel main body 2a and the cover member 3a are made of a material that will not be corroded by the reaction solution 4a, that can withstand the conditions of the reaction that occurs in the reaction chamber 21a (such as the reaction temperature), and that has optical transparency.

Since the reaction vessel main body 2a is made entirely of a light transmitting material, light can be transmitted from the outside of the reaction vessel main body 2a to the reaction solution 4a held in the tightly closed space S1a, and from the reaction solution 4a held in the tightly closed space S1a to the outside of the reaction vessel main body 2a, through the bottom plate 22a and the first side plate 23a of the reaction vessel main body 2a.

Also, since the cover member 3a is made entirely of a light transmitting material, light can be transmitted from the outside of the reaction vessel main body 2a to the reaction solution 4a held in the tightly closed space S1a, and from the reaction solution 4a held in the tightly closed space S1a to the outside of the reaction vessel main body 2a, through the pressing part 32a of the cover member 3a.

However, the reaction vessel main body 2a and the cover member 3a do not need to be made entirely from a light transmitting material, and it will be sufficient if the portion where light needs to be transmitted in order to monitor the progress of the reaction occurring in the reaction chamber 21a is made from a light transmitting material.

For example, if the irradiation of the reaction solution 4a with the excitation light and the detection of fluorescent light from the reaction solution 4a are performed through the first side plate 23a of the reaction vessel main body 2a, then just the first side plate 23a of the reaction vessel main body 2a may be made of a light transmitting material. If the irradiation of the reaction solution 4a with the excitation light and the detection of fluorescent light from the reaction solution 4a are performed through the bottom plate 22a of the reaction vessel main body 2a, then just the bottom plate 22a of the reaction vessel main body 2a may be made of a light transmitting material. If the irradiation of the reaction solution 4a with the excitation light and the detection of fluorescent light from the reaction solution 4a are performed through the pressing part 32a of the cover member 3a, then just the pressing part 32a of the cover member 3a may be made of a light transmitting material.

Also, just the reaction vessel main body 2a or the cover member 3a may be made of a light transmitting material, and the other made of an opaque material. For example, if the irradiation of the reaction solution 4a with the excitation light and the detection of fluorescent light from the reaction solution 4a are performed through the first side plate 23a of the reaction vessel main body 2a, the cover member 3a may be made of a light transmitting material.

Examples of the material of the reaction vessel main body 2a and the cover member 3a include transparent or semitransparent thermoplastic resins and glass. If a thermoplastic resin is selected as the material of the reaction vessel main body 2a and the cover member 3a, the reaction vessel main body 2a and the cover member 3a can be easily formed by a standard process such as injection molding. If the reaction will reach a high temperature (such as 90 to 100°C), then it is preferable to use a material with excellent heat resistance, such as an engineering plastic.

As shown in Fig. 5, the reaction apparatus 10a pertaining to this embodiment comprises the reaction vessel 1a supported on a seat 53a, a temperature controller 6a equipped with thermoelectric semiconductor elements 61a and 62a, a light source 7a, a fluorescent light detector 8a, and a plurality of optical fibers 9a.

As shown in Fig. 5, the thermoelectric semiconductor element 61a of the temperature controller 6a is attached via a heat-conducting metal plate 51a to the pressing part 32a (upper surface of the pressing part 32a) of the cover member 3a, and the thermoelectric semiconductor element 62a is attached via the heat-conducting metal plate 51a to the bottom plate 22a (lower surface of the bottom plate 22a) of the reaction vessel main body 2a. The thermoelectric semiconductor elements are types that can be utilized as cooling elements and/or as heating elements, an example of which is a Peltier element.

The temperature controller 6a is designed so as to allow control of the heating and cooling performed by the thermoelectric semiconductor elements 61a and 62a, and the thermoelectric semiconductor elements 61a and 62a are electrically connected to the temperature controller 6a. Also, as shown in Fig. 5, heat radiators 52a having cooling fins are mounted on the thermoelectric semiconductor elements 61a and 62a, allowing the forced cooling of the thermoelectric semiconductor elements 61a and 62a. With the temperature controller 6a, the temperature of the reaction solution 4a held in the tightly closed space S1a of the reaction vessel 1a can be rapidly controlled by the movement of heat through the pressing part 32a of the cover member 3a and by the movement of heat through the bottom plate 22a of the reaction vessel main body 2a.

The reaction solution 4a is a PCR-use reaction solution, and the amount of the reaction solution 4a held in the tightly closed space S1a is preferable about 2 to 50 µL. A PCR proceeds as the temperature of the reaction solution 4a is controlled by the temperature controller 6a. Here, since the reaction solution 4a is held in the tightly closed space S1a in the form of a thin layer, the ratio of surface area to volume is higher, and furthermore nearly all of this surface area is accounted for by the upper and lower surfaces of the thin layer, that is, by the lower surface 312a (contact surface of the cover member) of the pressing part 32a of the cover member 3a and the upper surface 212a (opposing surface of the reaction chamber) of the bottom plate 22a of the reaction vessel main body 2a. Therefore, the temperature of the reaction solution 4a held in the tightly closed space S1a can be rapidly controlled by the movement of heat through the pressing part 32a of the cover member 3a and by the movement of heat through the bottom plate 22a of the reaction vessel main body 2a, which means that the PCR takes less time.

The light source 7a is an apparatus capable of emitting excitation liqht that will excite the fluorescent dye contained in the reaction solution 4a. As shown in Fig. 5, the plurality of optical fibers 9a are mounted in the light source 7a, and excitation light emitted from the light source 7a is directed through the optical fibers 9a. The optical fibers 9a are disposed around the first side plate 23a (the outer peripheral surface of the first side plate 23a) of the reaction vessel main body 2a as shown Fig. 5 and Fig. 6 (ii), and the excitation light emitted from the light source 7a and through the optical fibers 9a irradiates the reaction solution 4a held in the tightly closed space S1a through the first side plate 23a of the reaction vessel main body 2a.

In addition to H₂O, buffers, MgCl₂, dNTP mixes, primers, template DNA, Taq polymerase, and so forth, the reaction solution 4a also contains ethidium bromide, SYBR Green I, Pico Green, and other such fluorescent dyes that can serve as an index of the progress of a PCR (such as whether or not the target nucleic acids have been amplified, or the amount of PCR amplification product). Therefore, when the reaction solution 4a held in the tightly closed space S1a is irradiated with the excitation light, these fluorescent dyes emit fluorescent light. The fluorescent light emitted from the reaction solution 4a held in the tightly closed space S1a is transmitted through the first side plate 23a of the reaction vessel main body 2a to the outside of the reaction vessel main body 2a.

The fluorescent light detector 8a is an apparatus capable of detecting fluorescent light emitted from the reaction solution 4a. As shown in Fig. 5, the plurality of optical fibers 9a are mounted to the fluorescent light detector 8a, and the fluorescent light that is emitted from the reaction solution 4a held in the tightly closed space S1a and transmitted through the first side plate 23a of the reaction vessel main body 2a to outside of the reaction vessel main body 2a is received through the optical fibers 9a and detected by the fluorescent light detector 8a.

There are no particular restrictions on the structure of the light source 7a and the fluorescent light detector 8a, and any standard apparatus equipped with filters, reflecting mirrors, lenses, and so forth can be used.

The fluorescent intensity of the light emitted from the reaction solution 4a is proportional to the amount of DNA contained in the reaction solution 4a, so the progress of the PCR (such as whether or not the target nucleic acids have been amplified, or the amount of PCR amplification product) can be monitored in real time (that is, instantly during the course of the PCR) by detecting the fluorescent intensity.

The optical fibers 9a are connected at one end to the light source 7a or the fluorescent light detector 8a, and at the other end are disposed around the first side plate 23a (the outer peripheral surface of the first side plate 23a) of the reaction vessel main body 2a.

Fig. 6 shows examples of the layout of the optical fibers 9a. Fig. 6 corresponds to an A-A cross section of Fig. 5.

In Fig. 6 (i), optical fibers 9a are disposed at one end on one side of the outer peripheral surface of the first side plate 23a, which is quadrangular in cross sectional shape, so that irradiation of the reaction solution 4a with excitation light and the reception of the fluorescent light emitted from the reaction solution 4a can both be performed by the optical fibers 9a.

In Fig. 6 (ii), optical fibers 9a are disposed at one end on two facing sides of the outer peripheral surface of the first side plate 23a, which is quadrangular in cross sectional shape, so that irradiation of the reaction solution 4a with excitation light is performed by the optical fibers 9a disposed on one side, and the reception of the fluorescent light emitted from the reaction solution 4a is performed by the optical fibers 9a disposed on the other side.

In Fig. 6 (iii), optical fibers 9a are disposed at one end on two perpendicular sides of the outer peripheral surface of the first side plate 23a, which is quadrangular in cross sectional shape, so that irradiation of the reaction solution 4a with excitation light is performed by the optical fibers 9a disposed on one side, and the reception of the fluorescent light emitted from the reaction solution 4a is performed by the optical fibers 9a disposed on the other side.

With the examples shown in Figs. 6 (i) to (iii), the optical fibers are disposed perpendicular to the outer peripheral surface of the first side plate 23a, which simplifies the setting of the irradiation conditions and light reception conditions.

With the reaction apparatus 10a, of the reaction vessel main body 2a and the cover member 3a, the portions utilized for controlling the temperature of the reaction solution (the pressing part 32a of the cover member 3a and the bottom plate 22a of the reaction vessel main body 2a) are separate from the portions utilized for monitoring the progress of the reaction (the first side plate 23a of the reaction vessel main body 2a), which allows the temperature of the reaction solution 4a to be controlled rapidly and also allows the region where the reaction progress is monitored to be set freely.

With the reaction apparatus 10a, the type of irradiating excitation light and the type of detected fluorescent light may be the same among the various optical fibers, or may vary with each optical fiber or by optical fiber group. If the reaction solution 4a is made ahead of time to contain a plurality of different fluorescent dyes, and irradiation with excitation light corresponding to each fluorescent dye and the detection of the fluorescent light emitted from each fluorescent dye are performed by individual optical fiber or by optical fiber group, then different PCRs can be conducted at the same time, and the progress of the reactions (such as whether or not the target nucleic acids have been amplified, or the amount of PCR amplification product) can be monitored in real time. Also, if the same excitation light is emitted and the same fluorescent light detected by a plurality of optical fibers, then the entire reaction solution 4a can be irradiated with excitation light and the progress of the reaction can be monitored for the entire reaction solution 4a by disposing the optical fibers over one entire side of the outer peripheral surface of the first side plate 23a, which is quadrangular in lateral cross sectional shape.

The first embodiment described above is given in order to facilitate an understanding of the present invention, and does not limit the present invention in any way. Therefore, the various elements disclosed in the first embodiment should be construed as encompassing all design modifications, equivalents, etc., within the technological scope of the present invention.

For example, the optical fibers 9a can be disposed on the upper surface of the pressing part 32a of the cover member 3a. In this case, the irradiation of the reaction solution 4a with the excitation light and/or the detection of the fluorescent light from the reaction solution 4a can be performed through the pressing part 32a of the cover member 3a.

The optical fibers 9a can also be disposed on the lower surface of the bottom plate 22a of the reaction vessel main body 2a. In this case, the irradiation of the reaction solution 4a with the excitation light and/or the detection of the fluorescent light from the reaction solution 4a can be performed through the bottom plate 22a of the reaction vessel main body 2a.

Also, the irradiation of the reaction solution 4a with the excitation light and the detection of the fluorescent light from the reaction solution 4a can be performed by utilizing lenses or the like, rather than optical fibers. The use of lenses facilitates irradiating the entire reaction solution 4a with excitation light and the detection of fluorescent light emitted from the entire reaction solution 4a.

### Second Embodiment

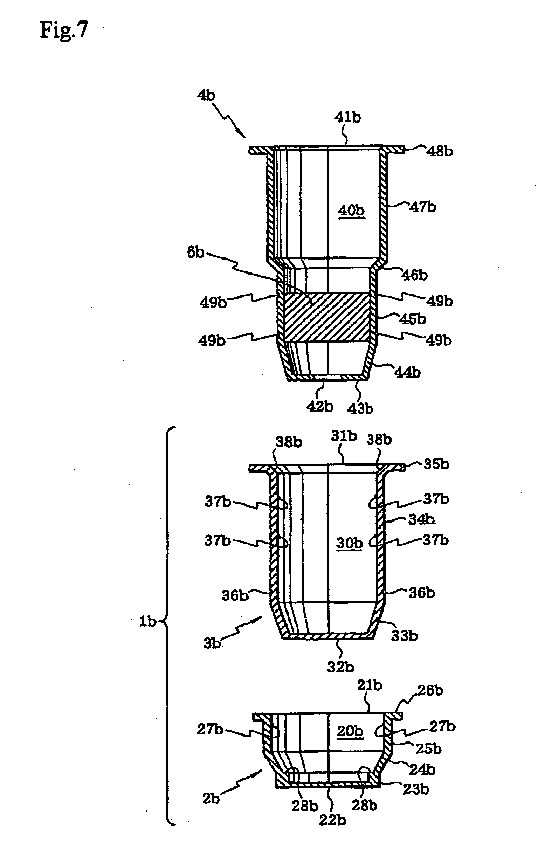

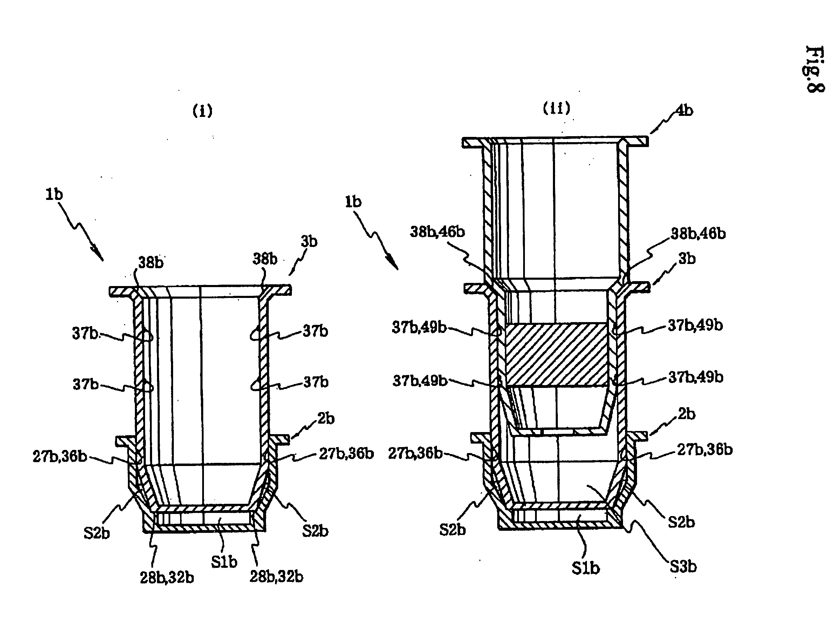

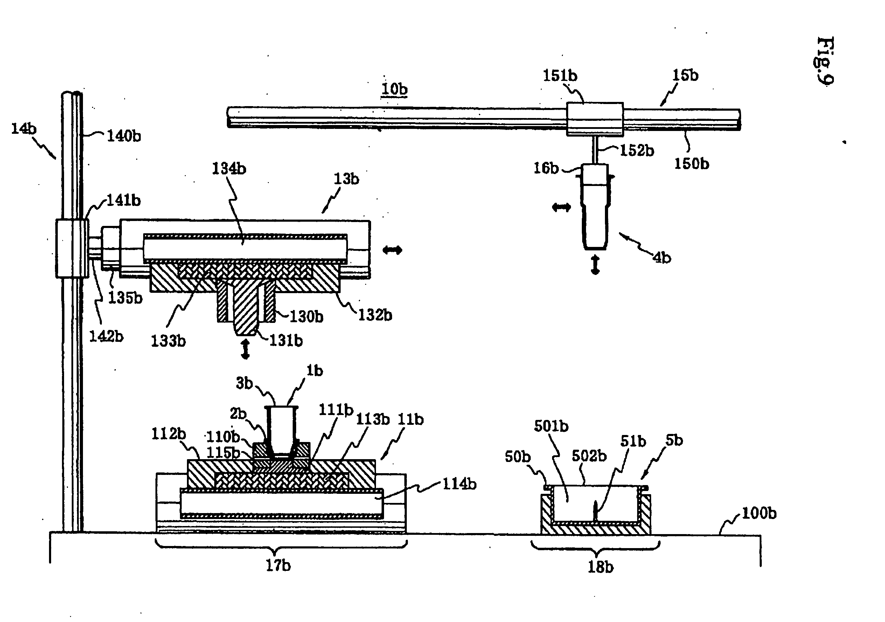

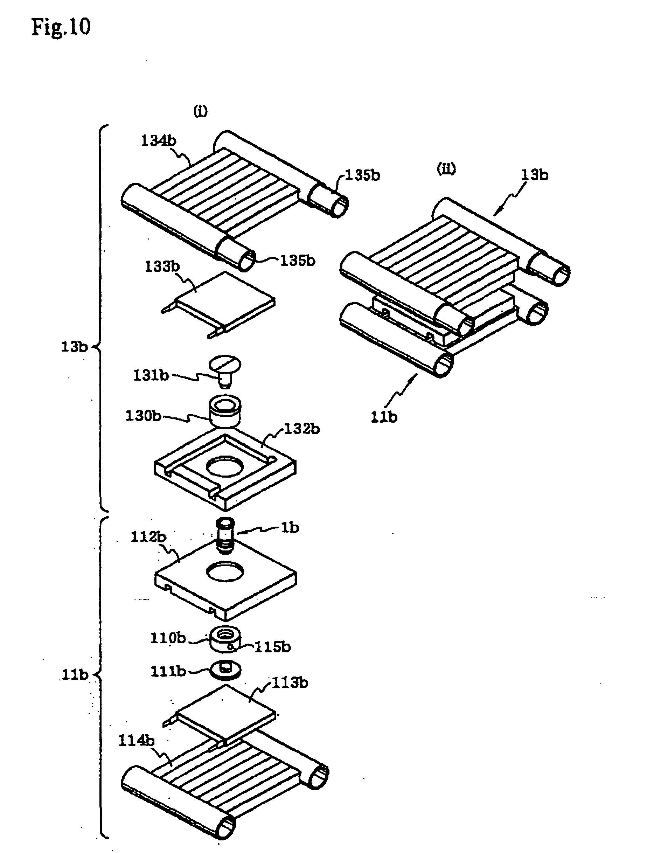

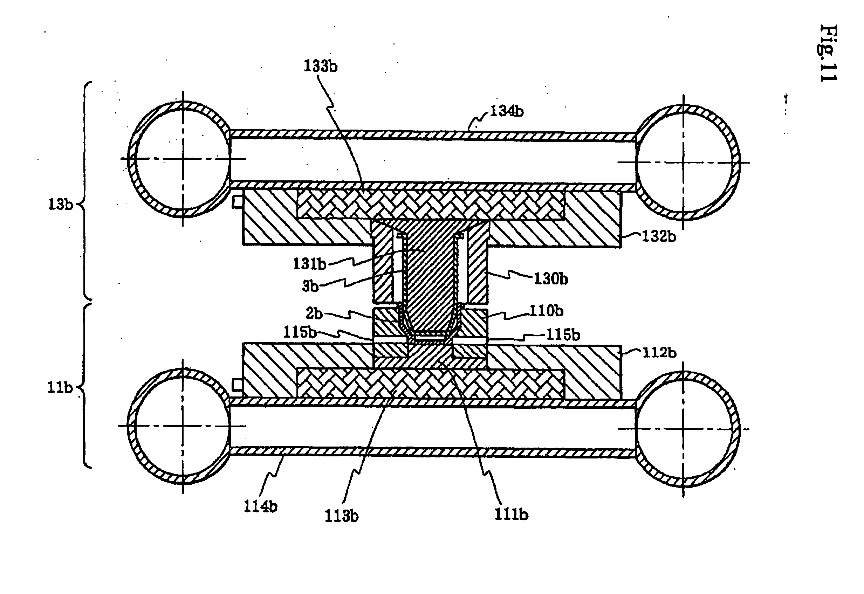

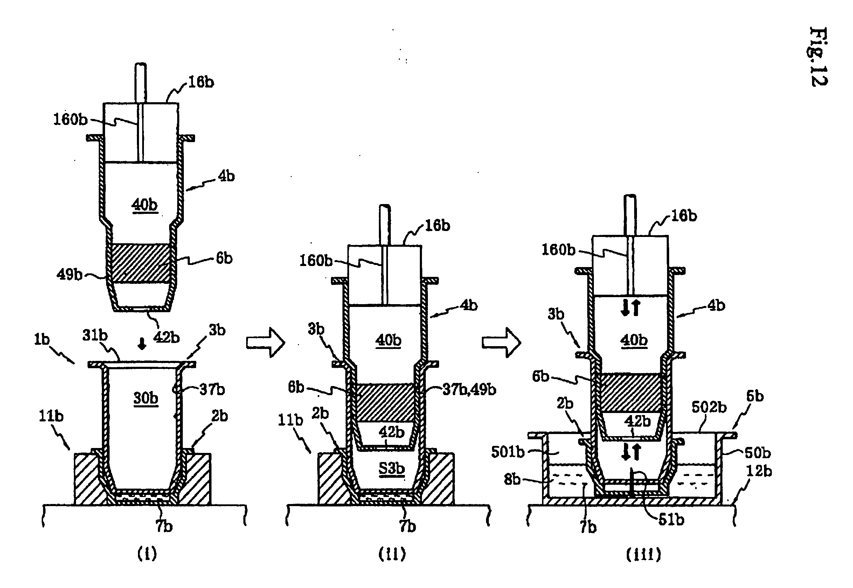

Fig. 7 is a cross section illustrating a second embodiment of the reaction vessel pertaining to the present invention; Fig. 8 (i) is a cross section illustrating a state in which the cover member is mounted on the reaction vessel main body in the reaction vessel pertaining to the second embodiment; Fig. 8 (ii) is a cross section illustrating a state in which the nozzle tip has been mounted on the cover member covering the reaction vessel main body in the reaction vessel pertaining to the second embodiment; Fig. 9 is a partial cross section illustrating a second embodiment of the reaction apparatus pertaining to the present invention; Fig. 10 (i) is an exploded oblique view illustrating the structure of the first temperature controller and second temperature controller provided to the reaction apparatus pertaining to the second embodiment; Fig. 10 (ii) is an oblique view illustrating the state of the first temperature controller and second temperature controller during a reaction; Fig. 11 is a cross section illustrating the state near the reaction vessel during a reaction in the reaction apparatus pertaining to the second embodiment; and Fig. 12 is a partial cross section illustrating the operation up to the reaction product extraction of the reaction apparatus pertaining to the second embodiment.

As shown in Figs. 7 and 8, the reaction vessel 1b pertaining to this embodiment comprises a reaction vessel main body 2b and a cover member 3b.

As shown in Fig. 7, the reaction vessel main body 2b has a disk-shaped bottom plate 22b, a first side plate 23b in the form of a cylinder that rises up from the edges of the bottom plate 22b while maintaining the same diameter, a tapering second side plate 24b that rises up from the top edge of the first side plate 23b while gradually expanding in diameter, a third side plate 25b in the form of a cylinder that rises up from the top edge of the second side plate 24b while maintaining the same diameter, and a flange 26b provided at the top edge of the third side plate 25b.

The bottom plate 22b and the first to third side plates 23b to 25b of the reaction vessel main body 2b consist of thin plates made of a material that will not be corroded by the reaction solution, that can withstand the conditions of the reaction that occurs in the reaction chamber (such as the reaction temperature), and that has optical transparency. The thickness of the thin plates is preferably about 0.1 to 0.5 mm.

As shown in Fig. 7, a reaction chamber 20b surrounded by the bottom plate 22b and the first to third side plates 23b to 25b is formed in the reaction vessel main body 2b, and an opening 21b that leads to the reaction chamber 20b is formed at the top end of the reaction vessel main body 2b.

The reaction chamber 20b is designed so that a reaction solution can be introduced through the opening 21b. Also, the reaction chamber 20b does not lead to any opening other than the opening 21b, and is therefore closed off when the opening 21b is sealed (see Fig. 8 (i)).

The inside diameter of the third side plate 25b of the reaction vessel main body 2b is substantially the same as the outside diameter of a second side plate 34b of the cover member 3b, so that when the cover member 3b is placed over the reaction vessel main body 2b, the inner peripheral surface of the third side plate 25b of the reaction vessel main body 2b fits snugly against the outer peripheral surface of the second side plate 34b of the cover member 3b (see Fig. 8 (i)).

As shown in Fig. 7, a convex component 27b is provided on the inner peripheral surface of the third side plate 25b of the reaction vessel main body 2b, and the convex component 27b is designed to fit into a concave component 36b provided on the outer peripheral surface of the second side plate 34b of the cover member 3b (see Fig. 8 (i)).

As shown in Fig. 7, an abutting surface 28b is provided to the top end of the first side plate 23b of the reaction vessel main body 2b, and the abutting surface 28b is designed so as to strike the a bottom plate 32b of the cover member 3b when the cover member 3b is placed over the reaction vessel main body 2b (see Fig. 8 (i)).

As shown in Fig. 7, the cover member 3b has the disk-shaped bottom plate 32b, a tapering first side plate 33b that rises up from the edges of the bottom plate 32b so as to gradually increase in diameter, the second side plate 34b in the form of a cylinder that rises up from the top end of the first side plate 33b while maintaining the same diameter, and a flange 35b provided to the top edges of the second side plate 34b.

The bottom plate 32b, the first side plate 33b, and the second side plate 34b of the cover member 3b consist of thin plates made of a material that will not be corroded by the reaction solution, that can withstand the conditions of the reaction that occurs in the reaction chamber (such as the reaction temperature), and that has optical transparency (such as transparent or semitransparent thermoplastic resins and glass). The thickness of the thin plates is preferably about 0.1 to 0.5 mm.

As shown in Fig. 7, a nozzle tip fitting space 30b surrounded by the bottom plate 32b, the first side plate 33b, and the second side plate 34b is formed in the cover member 3b, and a nozzle tip fitting hole 31b that leads into the nozzle tip fitting space 30b is formed at the top end of the cover member 3b.

The nozzle tip fitting space 30b is formed so that a nozzle tip 4b can be mounted through the nozzle tip fitting hole 31b (see Fig. 8 (ii)). Also, the nozzle tip fitting space 30b does not lead to any opening other than the nozzle tip fitting hole 31b, and is therefore closed off when the nozzle tip fitting hole 31b is sealed (see Fig. 8 (ii)).

The nozzle tip fitting hole 31b is formed in the portion of the cover member 3b other than the portion where the opening 21b of the reaction vessel main body 2b is sealed off, so when the cover member 3b is mounted on the reaction vessel main body 2b, the nozzle tip 4b can be mounted in the nozzle tip fitting space 30b through the nozzle tip fitting hole 31b (see Fig. 8 (ii)).

The deepest portion of the nozzle tip fitting space 30b (the portion of the nozzle tip fitting space 30b farthest away from the nozzle tip fitting hole 31b) is formed by the bottom plate 32b of the cover member 3b, and the nozzle tip 4b is mounted toward the deepest part of the nozzle tip fitting space 30b from the nozzle tip fitting hole 31b (see Fig. 8 (ii)).

The mounting direction of the nozzle tip 4b with respect to the nozzle tip fitting space 30b is perpendicular or substantially perpendicular to the surface (the lower surface of the bottom plate 22b of the reaction vessel 1b) on which the reaction vessel 1b is placed (see Fig. 8 (ii)), so the force exerted on the reaction vessel 1b by the nozzle tip 4b in the mounting of the nozzle tip 4b is a force that is perpendicular or substantially perpendicular to the surface on which the reaction vessel 1b is placed. Therefore, the nozzle tip 4b can be easily mounted in the nozzle tip fitting space 30b without the reaction vessel 1b shifting its position while the nozzle tip 4b is being mounted.

The outside diameter of the second side plate 34b of the cover member 3b is substantially the same as the inside diameter of the third side plate 25b of the reaction vessel main body 2b, so that the inner peripheral surface of the third side plate 25b of the reaction vessel main body 2b fits snugly against the outer peripheral surface of the second side plate 34b of the cover member 3b when the cover member 3b is placed over the reaction vessel main body 2b (see Fig. 8 (i)).

As shown in Fig. 7, the concave component 36b is provided on the outer peripheral surface of the second side plate 34b of the cover member 3b, and the concave component 36b mates with the convex component 27b provided on the inner peripheral surface of the third side plate 25b of the reaction vessel main body 2b (see Fig. 8 (i)).

As shown in Fig. 7, a convex component 37b is provided on the inner peripheral surface of the second side plate 34b of the cover member 3b, and the convex component 37b mates with a concave component 49b provided on the outer peripheral surface of a second side plate 44b of the nozzle tip 4b (see Fig. 8 (ii)).

As shown in Fig. 7, an abutting surface 38b is provided to the top end of the second side plate 34b of the cover member 3b, and the abutting surface 38b strikes a third side plate 46b of the nozzle tip 4b when the nozzle tip 4b is mounted in the nozzle tip fitting space 30b (see Fig. 8 (ii) ) .

When the cover member 3b is placed over the reaction vessel main body 2b, as shown in Fig. 8 (i), the inner peripheral surface of the third side plate 25b of the reaction vessel main body 2b fits snugly against the outer peripheral surface of the second side plate 34b of the cover member 3b, the opening 21b of the reaction vessel main body 2b is sealed off by the bottom plate 32b, the first side plate 33b, and the second side plate 34b of the cover member 3b, and the reaction chamber 20b of the reaction vessel main body 2b is closed off. Here, as shown in Fig. 8 (i), the convex component 27b provided to the third side plate 25b of the reaction vessel main body 2b fits into the concave component 36b provided to the second side plate 34b of the cover member 3b, so that the cover member 3b is fixed to the reaction vessel main body 2b, which makes the covering of the reaction vessel main body 2b by the cover member 3b more secure.

Also, when the cover member 3b is placed over the reaction vessel main body 2b, as shown in Fig. 8 (i), the abutting surface 28b provided to the top end of the first side plate 23b of the reaction vessel main body 2b strikes the bottom plate 32b of the cover member 3b, which defines the location of the bottom plate 32b of the cover member 3b within the reaction chamber 20b (in this embodiment, the bottom plate 32b of the cover member 3b is limited so as not to come into contact with the bottom plate 22b of the reaction vessel main body 2b), and forms a tightly closed space S1b between the bottom plate 22b of the reaction vessel main body 2b and the bottom plate 32b of the cover member 3b. Specifically, a tightly closed space S1b is formed by the lower surface (contact surface of the cover member) of the bottom plate 32b of the cover member 3b, the upper surface (opposing surface of the reaction chamber) of the bottom plate 22b of the reaction vessel main body 2b, and the inner peripheral surface (enveloping surface of the reaction chamber) of the first side plate 23b of the reaction vessel main body 2b, so that part of the reaction solution is held in the form of a thin layer in this tightly closed space S1b. The reaction solution held in the tightly closed space S1b is in contact with the lower surface (contact surface of the cover member) of the bottom plate 32b of the cover member 3b, the upper surface (opposing surface of the reaction chamber) of the bottom plate 22b of the reaction vessel main body 2b, and the inner peripheral surface (enveloping surface of the reaction chamber) of the first side plate 23b of the reaction vessel main body 2b.

When the cover member 3b is placed over the reaction vessel main body 2b, as shown in Fig. 8 (i), a tightly closed space S2b is formed between the second side plate 24b and the third side plate 25b of the reaction vessel main body 2b and the first side plate 33b of the cover member 3b. The reaction solution is held in the tightly closed space S1b formed within the reaction chamber 20b when the cover member 3b is put in place, and any surplus reaction solution that will not be held in the tightly closed space S1b is held in the tightly closed space S2b. At this point the reaction solution is pressed by the bottom plate 32b of the cover member 3b, any air inside the reaction chamber 20b, bubbles in the reaction solution, and so forth are pushed along with the reaction solution to the top part of the reaction chamber 20b and held in the tightly closed space S2b, and part thereof is discharged from the opening 21b to outside the reaction chamber 20b, which prevents the admixture of air into the tightly closed space S1b and the admixture of bubbles into the reaction solution held in the tightly closed space S1b.

As shown in Fig. 7, the nozzle tip 4b pertaining to this embodiment has a disk-shaped distal end plate 43b constituting the distal end of the nozzle tip 4b, the tapering first side plate 44b that rises up from the edges of the distal end plate 43b while gradually expanding in diameter, a cylindrical second side plate 45b that rises up from the top end of the first side plate 44b while maintaining the same diameter, a tapering third side plate 46b that rises up from the edges of the second side plate 45b while gradually expanding in diameter, a cylindrical fourth side plate 47b that rises up from the top end of the third side plate 46b while maintaining the same diameter, and a flange 48b provided to the top edges of the fourth side plate 47b.

As shown in Fig. 7, an internal space 40b surrounded by the distal end plate 43b and the first to fourth side plates 44b to 47b is formed in the nozzle tip 4b. A nozzle mounting hole 41b that leads to the internal space 40b is formed at the top end of the nozzle tip 4b, and an intake and discharge hole 42b that leads to the nozzle mounting hole 41b through the internal space 40b is formed in the distal end plate 43b of the nozzle tip 4b.

The nozzle tip 4b is designed so that a nozzle 16b can be mounted in the internal space 40b through the nozzle mounting hole 41b (see Fig. 12), and the intake and discharge forces produced by the nozzle 16b can be transmitted through the internal space 40b and the intake and discharge hole 42b to the outside of the nozzle tip 4b.

As shown in Fig. 7, a filter 6b is provided in the internal space 40b of the nozzle tip 4b. As shown in Fig. 7, the filter 6b is provided so as to be located near the intake and discharge hole 42b, which prevents any spray of liquid from getting into the internal space 40b from the intake and discharge hole 42b, and thereby preventing the contamination of the internal space 40b.

The outside diameter of the second side plate 45b of the nozzle tip 4b is substantially the same as the inside diameter of the second side plate 34b of the cover member 3b, and when the nozzle tip 4b is mounted in the nozzle tip fitting space 30b of the cover member 3b, the outer peripheral surface of the second side plate 45b of the nozzle tip 4b fits snugly against the inner peripheral surface of the second side plate 34b of the cover member 3b (see Fig. 8 (ii)).

As shown in Fig. 7, the concave component 49b is provided on the outer peripheral surface of the second side plate 45b of the nozzle tip 4b, and the concave component 49b mates with the convex component 37b provided on the inner peripheral surface of the second side plate 34b of the cover member 3b (see Fig. 8 (ii)).

When the nozzle tip 4b is mounted in the nozzle tip fitting space 30b of the cover member 3b, as shown in Fig. 8 (ii), the inner peripheral surface of the second side plate 34b of the cover member 3b fits snugly against the outer peripheral surface of the second side plate 45b of the nozzle tip 4b, the nozzle tip fitting hole 31b is sealed off by the distal end plate 43b and the first and second side plates 44b and 45b of the nozzle tip 4b, and the nozzle tip fitting space 30b is closed off. The term "closed off" as used here means that there are no gaps, slits, or the like that would hinder the transmission of the intake force or discharge force of the nozzle 16b to the nozzle tip fitting space 30b, and a state in which the nozzle tip fitting space 30b leads to the intake and discharge hole 42b of the nozzle tip 4b is encompassed by "closed off."

Also, when the nozzle tip 4b is mounted in the nozzle tip fitting space 30b of the cover member 3b, as shown in Fig. 8 (ii), the convex component 37b provided to the second side plate 34b of the cover member 3b fits into the concave component 49b provided to the second side plate 45b of the nozzle tip 4b, so that the nozzle tip 4b is fixed to the cover member 3b, which makes the mounting of the nozzle tip 4b in the nozzle tip fitting space 30b more secure.

Also, when the nozzle tip 4b is mounted in the nozzle tip fitting space 30b of the cover member 3b, as shown in Fig. 8 (ii), the abutting surface 38b provided to the top end of the second side plate 34b of the cover member 3b abuts against the third side plate 46b of the nozzle tip 4b, which defines the location of the distal end plate 43b of the nozzle tip 4b in the nozzle tip fitting space 30b (in this embodiment, the distal end plate 43b of the nozzle tip 4b is defined so as not to come into contact with the bottom plate 32b of the cover member 3b and seal off the intake and discharge hole 42b of the nozzle tip 4b), and forms a tightly closed space S3b that leads to the intake and discharge hole 42b of the nozzle tip 4b between the bottom plate 32b of the cover member 3b and the distal end plate 43b of the nozzle tip 4b. The tightly closed space S3b has no opening other than the intake and discharge hole 42b of the nozzle tip 4b, so the intake and discharge forces produced by the nozzle 16b can be efficiently transmitted from the intake and discharge hole 42b of the nozzle tip 4b to the tightly closed space S3b.

When the cover member 3b is mounted on the reaction vessel main body 2b and the nozzle tip 4b is mounted to the cover member 3b, the tightly closed space S1b, as shown in Fig. 8 (ii), has a contact surface with the bottom plate 22b of the reaction vessel main body 2b, and also has a contact surface with the bottom plate 32b of the cover member 3b. Also, as shown in Fig. 8 (ii), the tightly closed space S3b has a contact surface with the bottom plate 32b of the cover member 3b. Therefore, the outside of the reaction vessel 1b can be made to communicate tightly closed space S1b and the tightly closed space S3b by forming a through-hole in the bottom plate 22b of the reaction vessel main body 2b and the bottom plate 32b of the cover member 3b with a puncture needle provided to the outside of the reaction vessel 1b (see Fig. 12 (iii)). At this point the bottom plate 32b of the cover member 3b is opposed against the deepest part of the tightly closed space S1b (the bottom plate 22b of the reaction vessel main body 2b constituting the surface on which the reaction vessel 1b is placed), so a through-hole that communicates between the outside of the reaction vessel 1b and the tightly closed space S1b and the tightly closed space S3b can be formed in the bottom plate 22b of the reaction vessel main body 2b and the bottom plate 32b of the cover member 3b by a puncture needle (such as a puncture needle 51b provided to a puncture vessel 5b) provided perpendicular or substantially perpendicular to the surface on which the reaction vessel 1b is placed (the lower surface of the bottom plate 22b of the reaction vessel main body 2b) (see Fig. 12 (iii)).

As shown in Fig. 9, the puncture vessel 5b pertaining to this embodiment comprises a main body 50b and the puncture needle 51b. The main body 50b has a bottom plate that is quadrangular in plan view, a side plate in the form of an angular cylinder that rises up from the edges of the bottom plate, and a flange provided to the top edges of the side plate. A liquid holding space 501b surrounded by the bottom plate and the side plate is formed in the main body 50b, and an opening 502b that leads to the liquid holding space 501b is formed at the top end of the main body 50b.

The liquid holding space 501b of the puncture vessel 5b is designed so that a liquid can be introduced through the opening 502b, and so that the reaction vessel 1b can be accommodated (see Fig. 12 (iii)).

As shown in Fig. 9, the puncture needle 51b is provided so as to protrude from the bottom plate of the main body 50b into the liquid holding space 501b and so as to be substantially perpendicular to the surface on which the reaction vessel 1b is placed (the upper surface of the bottom plate of the main body 50b). When the reaction vessel 1b, in which the cover member 3b is mounted on the reaction vessel main body 2b, is placed in the liquid holding space 501b, a through-hole can be formed in the bottom plate 22b of the reaction vessel main body 2b and the bottom plate 32b of the cover member 3b (see Fig. 12 (iii)).

As shown in Fig. 9, the distal end of the puncture needle 51b is pointed, and the puncture needle 51b is made of stainless steel or another such metal capable of puncturing the plastic, glass, or the like constituting the reaction vessel main body 2b and cover member 3b.

As shown in Fig. 9, the reaction apparatus 10b pertaining to this embodiment comprises a reaction vessel installation part 17b in which the reaction vessel 1b is installed, a puncture vessel installation part 18b in which the puncture vessel 5b is installed, a nozzle 16b capable of taking up and discharging a liquid, a nozzle transfer part 15b that moves the nozzle 16b in a specific direction, a first temperature controller 11b provided to the reaction vessel installation part 17b, a second temperature controller 13b, and a temperature controller mounting and removing part 14b that moves the second temperature controller 13b in a specific direction.

As shown in Fig. 9, the reaction vessel installation part 17b and the puncture vessel installation part 18b are provided on a base 100b, and a space in which the second temperature controller 13b and the nozzle 16b can move up, down, left, and right is provided above the base 100b.

As shown in Fig. 9, the first temperature controller 11b is provided to the reaction vessel installation part 17b, and the reaction vessel 1b is installed on the first temperature controller 11b.

As shown in Figs. 9 to 11, the first temperature controller 11b comprises a heat-blocking ring 110b, a heat conductor 111b, a heat-blocking case 112b, a thermoelectric semiconductor element 113b, and a heat sink 114b.

As shown in Figs. 9 to 11, a space is formed in the approximate center of the heat-blocking ring 110b so that the reaction vessel main body 2b can be introduced through an opening at the top, and so that the protrusion of the heat conductor 111b can be mounted through an opening at the bottom. The reaction vessel main body 2b held in this space is supported by the protrusion of the heat conductor 111b mounted in the space. The heat-blocking ring 110b is made from a ceramic or other heat-blocking material, and is designed to allow the efficient transfer of heat between the heat conductor 111b and the reaction vessel main body 2b.

Also, as shown in Figs. 9 to 11, an optical fiber mounting hole 115b that communicates with the space in which the reaction vessel main body 2b is held is provided to the heat-blocking ring 110b, and optical fibers can be disposed around the first side plate 23b (the outer peripheral surface of the first side plate 23b) of the reaction vessel main body 2b supported by the protrusion of the heat conductor 111b by mounting optical fibers in the optical fiber mounting hole 115b. A plurality of the optical fiber mounting holes 115b are provided to the heat-blocking ring 110b, and optical fibers connected to a light source (not shown) and optical fibers connected to a fluorescent light detector (not shown) are mounted in these optical fiber mounting holes 115b, so that the excitation light emitted from the light source and through the optical fibers can irradiate the reaction solution held in the tightly closed space S1b through the first side plate 23b of the reaction vessel main body 2b, and the fluorescent light that is emitted from the reaction solution held in the tightly closed space S1b and that is transmitted through the first side plate 23b of the reaction vessel main body 2b to the outside of the reaction vessel main body 2b can be received through the optical fibers and detected by the fluorescent light detector.

As shown in Figs. 9 to 11, the heat conductor 111b comprises a disk and a protrusion. The protrusion fits into the heat-blocking ring 110b, while the disk comes into contact with the upper surface of the thermoelectric semiconductor element 113b provided on the heat sink 114b. The heat conductor 111b is made of copper or another such metal, so any heat generated by the thermoelectric semiconductor element 113b can be efficiently transmitted to the reaction vessel main body 2b.

The thermoelectric semiconductor element 113b is a type that can be utilized as a cooling element and/or as a heating element, an example of which is a Peltier element. The thermoelectric semiconductor element 113b is connected to a power source (not shown), and when power is supplied from this power source, the heat conductor 111b can be heated and/or cooled. As shown in Figs. 9 to 11, the lower surface of the thermoelectric semiconductor element 113b is in contact with the heat sink 114b, which has cooling fins, and the thermoelectric semiconductor element 113b is forcibly cooled by the heat sink 114b.

As shown in Figs. 9 to 11, the heat conductor 111b and the thermoelectric semiconductor element 113b are held inside the heat-blocking case 112b, which is made of a ceramic or other heat-blocking material, so the heat conductor 111b can be efficiently cooled and/or heated by the thermoelectric semiconductor element 113b.

The first temperature controller 11b transmits the heat applied to the heat conductor 111b by the thermoelectric semiconductor element 113b through the contact surface between the lower surface of the reaction vessel main body 2b and the protrusion of the heat conductor 111b to the reaction vessel main body 2b, so that the temperature of the reaction solution held in the tightly closed space S1b can be controlled by the movement of heat through the bottom plate 22b of the reaction vessel main body 2b.

As shown in Figs. 9 to 11, the second temperature controller 13b comprises a heat-blocking ring 130b, a heat conductor 131b, a heat-blocking case 132b, a thermoelectric semiconductor element 133b, a heat sink 134b, and an arm attachment component 135b to which is attached an extending arm 142b of the temperature controller mounting and removing part 14b.

As shown in Figs. 9 to 11, a space is formed in the approximate center of the heat-blocking ring 130b in which the protrusion of the heat conductor 131b can be inserted through the opening on top, and the cover member 3b can be inserted through the opening on the bottom. The heat-blocking ring 130b is made from a ceramic or other heat-blocking material, and is designed to allow the efficient transfer of heat between the heat conductor 131b and the cover member 3b.

As shown in Figs. 9 to 11, the heat conductor 131b comprises a disk and a protrusion. The protrusion is inserted into the heat-blocking ring 130b, while the disk comes into contact with the lower surface of the thermoelectric semiconductor element 133b. The protrusion of the heat conductor 131b is formed so that it can be mounted in the nozzle tip fitting space 30b of the cover member 3b, and the protrusion of the heat conductor 131b mounted in the nozzle tip fitting space 30b is in contact with the bottom plate 32b, the first side plate 33b, and the second side plate 34b of the cover member 3b. The outside diameter of the protrusion of the heat conductor 131b is smaller than the inside diameter of the heat-blocking ring 130b, and when the protrusion of the heat conductor 131b is inserted into the heat-blocking ring 130b, a gap that leads to the bottom opening in the heat-blocking ring 130b is formed between the outer peripheral surface of the protrusion of the heat conductor 131b and the inner peripheral surface of the heat-blocking ring 130b. The cover member 3b can be inserted into this gap, and even when the protrusion of the heat conductor 131b has been inserted into the heat-blocking ring 130b, the protrusion of the heat conductor 131b can still be mounted in the nozzle tip fitting space 30b of the cover member 3b. The heat conductor 131b is made of copper or another such metal, so any heat generated by the thermoelectric semiconductor element 133b can be efficiently transmitted to the cover member 3b.

The thermoelectric semiconductor element 133b is a type that can be utilized as a cooling element and/or as a heating element, an example of which is a Peltier element. The thermoelectric semiconductor element 133b is connected to a power source (not shown), and when power is supplied from this power source, the heat conductor 131b can be heated and/or cooled. As shown in Figs. 9 to 11, the upper surface of the thermoelectric semiconductor element 133b is in contact with the heat sink 134b, which has cooling fins, and the thermoelectric semiconductor element 131b is forcibly cooled by the heat sink 134b.

As shown in Figs. 9 to 11, the heat conductor 131b and the thermoelectric semiconductor element 133b are held inside the heat-blocking case 132b, which is made of a ceramic or other heat-blocking material, so the heat conductor 131b can be efficiently cooled and/or heated by the thermoelectric semiconductor element 133b.

The second temperature controller 13b is designed so that when the protrusion of the heat conductor 131b is mounted in the nozzle tip fitting space 30b of the cover member 3b, the heat applied to the heat conductor 131b by the thermoelectric semiconductor element 133b is transmitted through the contact surface between the protrusion of the heat conductor 111b and the bottom plate 32b, the first side plate 33b, and the second side plate 34b of the cover member 3b, so that the temperature of the reaction solution held in the tightly closed space S1b can be controlled by the movement of heat through the bottom plate 32b of the cover member 3b.

As shown in Fig. 9, the temperature controller mounting and removing part 14b comprises a rail 140b provided substantially perpendicular to the upper surface of the base 100b, a movable component 141b that can move along the rail 140b, and the extending arm 142b provided to the movable component 141b.

As shown in Fig. 9, the extending arm 142b is provided to the movable component 141b so as to be able of extend and retract horizontally with respect to the upper surface of the base 100b. As shown in Fig. 9, the second temperature controller 13b is attached via the arm attachment component 135b to the distal end of the extending arm 142b, and the second temperature controller 13b is moved horizontally with respect to the upper surface of the base 100b by the extension or retraction of the extending arm 142b, and is moved vertically with respect to the upper surface of the base 100b by the movement of the movable component 141b.

The temperature controller mounting and removing part 14b is designed so that the protrusion of the heat conductor 131b can be mounted in the nozzle tip fitting space 30b of the cover member 3b of the reaction vessel 1b placed on the first temperature controller 11b, or removed from the nozzle tip fitting space 30b, by moving the second temperature controller 13b horizontally or vertically with respect to the upper surface of the base 100b.

The nozzle 16b is connected to a liquid intake and discharge apparatus (not shown) and is designed so that a liquid can be taken up and discharged through an intake and discharge hole 160b. The intake and discharge hole 160b leads to the distal end of the nozzle 16b, and is designed so that intake force and discharge force can be transmitted to the nozzle tip 4b mounted at the distal end of the nozzle 16b through an O-ring or the like.

As shown in Fig. 9, the nozzle transfer part 15b comprises a rail 150b provided horizontally with respect to the upper surface of the base 100b, a movable component 151b that can move along the rail 150b, and an extending arm 152b provided to the movable component 151b.

As shown in Fig. 9, the extending arm 152b is provided to the movable component 151b so as to be able of extend and retract vertically with respect to the upper surface of the base 100b. As shown in Fig. 9, the nozzle 16b attached to the distal end of the extending arm 152b is moved vertically with respect to the upper surface of the base 100b by the extension or retraction of the extending arm 152b, and is moved horizontally with respect to the upper surface of the base 100b by the movement of the movable component 151b.

The nozzle transfer part 15b is designed so that the nozzle tip 4b mounted on the nozzle 16b can be mounted in the nozzle tip fitting space 30b of the cover member 3b of the reaction vessel 1b placed on the first temperature controller 11b by moving the nozzle 16b horizontally or vertically with respect to the upper surface of the 100b. Further, the nozzle transfer part 15b is designed so that the reaction vessel 1b to which the nozzle tip 4b is mounted is moved to the puncture vessel installation part 18b and introduced through an opening 502b into a liquid holding space 501b of the puncture vessel 5b placed in the puncture vessel installation part 18b, and a through-hole can be formed in the bottom plate 22b of the reaction vessel main body 2b and the bottom plate 32b of the cover member 3b by the puncture needle 51b provided to the puncture vessel 5b.

Furthermore, the operation for the temperature controller mounting and removing part 14b and the operation for the nozzle transfer part 15b are controlled so as not to interfere with each other.

The operation for the reaction apparatus 10b will be described by using as an example a case in which a PCR reaction solution is held in the reaction vessel 1b and a PCR is conducted.

After the PCR reaction solution has been introduced through the opening 21b into the reaction chamber 20b of the reaction vessel main body 2b, the cover member 3b is placed over the reaction vessel main body 2b. At this point the convex component 27b of the reaction vessel main body 2b fits into the concave component 36b of the cover member 3b, and the cover member 3b is fixed to the reaction vessel main body 2b (see Fig. 8 (i)). Also, the tightly closed space S1b and tightly closed space S2b are formed inside the reaction chamber 20b when the cover member 3b is put in place, so that the PCR reaction solution is held in the tightly closed space S1b, and any surplus PCR reaction solution that will not be held in the tightly closed space S1b is held in the tightly closed space S2b (see Fig. 8 (i)). The reaction vessel 1b in this state is placed in the first temperature controller 11b provided to the reaction vessel installation part 17b (see Figs. 9 and 11).

The reaction apparatus 10b performs an operation in which the second temperature controller 13b is moved by the temperature controller mounting and removing part 14b to the reaction vessel 1b placed in the first temperature controller 11b, and the protrusion of the heat conductor 131b of the second temperature controller 13b is mounted in the nozzle tip fitting space 30b of the cover member 3b (see Figs. 9 and 11).

The reaction apparatus 10b also performs an operation in which, after the protrusion of the heat conductor 131b has been mounted in the nozzle tip fitting space 30b, the temperature of the PCR reaction solution held in the tightly closed space S1b is controlled by the first temperature controller 11b and the second temperature controller 13b. As a result, the PCR proceeds in the PCR reaction solution held in the tightly closed space S1b, and PCR amplified fragments 7b are produced as the reaction product in the PCR reaction solution (see Fig. 12 (i)).

At this point the PCR reaction solution is held in the form of a thin layer in the tightly closed space S1b, so the ratio of surface area to volume is greater, and furthermore nearly all of this surface area is accounted for by the upper and lower surfaces of the thin layer, that is, by the lower surface (contact surface of the cover member) of the bottom plate 32b of the cover member 3b and the upper surface (opposing surface of the reaction chamber) of the bottom plate 22b of the reaction vessel main body 2b. Therefore, the temperature of the PCR reaction solution held in the tightly closed space S1b can be rapidly controlled by the movement of heat through the bottom plate 32b of the cover member 3b and by the movement of heat through the bottom plate 22b of the reaction vessel main body 2b, which means that the PCR takes less time.

Also, the progress of the PCR (such as whether or not the target nucleic acids have been amplified by PCR, or the amount of PCR amplification product) can be monitored in real time by irradiating the PCR reaction solution held in the tightly closed space S1b with excitation light emitted from the light source, and receiving the fluorescent light emitted from the PCR reaction solution held in the tightly closed space S1b and detecting this light with a fluorescent light detector, through optical fibers mounted in the optical fiber mounting hole 115b of the heat-blocking ring 110b.

The reaction apparatus 10b also performs an operation in which, after completion of the PCR, the second temperature controller 13b is moved by the temperature controller mounting and removing part 14b, and the protrusion of the heat conductor 131b of the second temperature controller 13b is removed from the nozzle tip fitting space 30b of the cover member 3b (see Fig. 9).

The reaction apparatus 10b also performs an operation in which, after the protrusion of the heat conductor 131b has been removed from the nozzle tip fitting space 30b, the nozzle 16b is moved by the nozzle transfer part 15b to above the reaction vessel 1b placed in the first temperature controller 11b, and the nozzle tip 4b mounted on the nozzle 16b is mounted in the nozzle tip fitting space 30b through the nozzle tip fitting hole 31b (see Fig. 12 (i) and (ii)). At this point the convex component 37b of the cover member 3b fits into the concave component 49b of the nozzle tip 4b, fixing the nozzle tip 4b to the cover member 3b. Also, the tightly closed space S3b that leads to the intake and discharge hole 42b of the nozzle tip 4b is formed inside the nozzle tip fitting space 30b by mounting the nozzle tip 4b in the nozzle tip fitting space 30b.

The reaction apparatus 10b also performs an operation in which, after the nozzle tip 4b mounted on the nozzle 16b has been mounted in the nozzle tip fitting space 30b, the nozzle 16b is moved by the nozzle transfer part 15b, and the reaction vessel 1b in which is placed the nozzle tip 4b mounted on the nozzle 16b is moved to above the puncture vessel installation part 18b (see Fig. 9). Since the cover member 3b is fixed to the reaction vessel main body 2b, and the nozzle tip 4b is fixed to the cover member 3b, the cover member 3b does not come out of the reaction vessel main body 2b during movement, nor does the nozzle tip 4b come out of the cover member 3b.

The reaction apparatus 10b also performs an operation in which, after the reaction vessel 1b has been moved to above the puncture vessel installation part 18b, the extending arm 152b is extended, the reaction vessel 1b is introduced through the opening 502b into the liquid holding space 501b of the puncture vessel 5b placed in the puncture vessel installation part 18b (at this point, the lower surface of the bottom plate 22b of the reaction vessel main body 2b is pressed against the puncture needle 51b provided to the puncture vessel 5b), and a through-hole that communicates between the liquid holding space 501b of the puncture vessel 5b, the tightly closed space S1b of the reaction vessel 1b, and the nozzle tip fitting space 30b is formed in the bottom plate 22b of the reaction vessel main body 2b and the bottom plate 32b of the cover member 3b by the puncture needle 51b provided to the puncture vessel 5b (see Fig. 12 (c)). At this point the puncture needle 51b punctures the bottom plate 22b of the reaction vessel main body 2b, forming a through-hole that communicates between the liquid holding space 501b of the puncture vessel 5b and the tightly closed space S1b of the reaction vessel 1b, and then punctures the bottom plate 32b of the cover member 3b, forming a through-hole that communicates between the tightly closed space S1b of the reaction vessel 1b and the tightly closed space S3b inside the nozzle tip fitting space 30b.

After the reaction vessel 1b has been punctured by the puncture needle 51b, the liquid holding space 501b of the puncture vessel 5b communicates with the tightly closed space S1b of the reaction vessel 1b through the through-hole formed in the bottom plate 22b of the reaction vessel main body 2b, and the tightly closed space S1b of the reaction vessel 1b communicates with the tightly closed space S3b inside the nozzle tip fitting space 30b through the through-hole formed in the bottom plate 32b of the cover member 3b, and since the tightly closed space S3b inside the nozzle tip fitting space 30b leads to the intake and discharge hole 42b of the nozzle tip 4b, the intake force and discharge force produced by the nozzle 16b can be transmitted to the liquid holding space 501b of the puncture vessel 5b.

The reaction apparatus 10b also performs an operation in which, after the puncture by the puncture needle 51b, intake and discharge by the nozzle 16b are commenced, and the extract 8b (such as a buffer) held in the liquid holding space 501b of the puncture vessel 5b is taken up and discharged through the above-mentioned through-holes, so that the PCR amplified fragments 7b contained in the PCR reaction solution in the tightly closed space S1b of the reaction vessel 1b are extracted into the extract 8b (see Fig. 12 (iii)). At this point, when the intake and discharge by the nozzle 16b are commenced, the extract 8b held in the liquid holding space 501b of the puncture vessel 5b flows into the tightly closed space S1b along with intake by the nozzle 16b, and flows out of the tightly closed space S1b along with discharge by the nozzle 16b. As the intake and discharge of the nozzle 16b are repeated over and over, this inflow of the extract 8b to the tightly closed space S1b and outflow from the tightly closed space S1b is also repeated, so that the PCR amplified fragments 7b contained in the PCR reaction solution in the tightly closed space S1b of the reaction vessel 1b are extracted into the extract 8b held in the liquid holding space 501b of the puncture vessel 5b.

After a PCR has thus been conducted when the cover member 3b covering the reaction vessel main body 2b, the PCR amplified fragments 7b contained in the PCR reaction solution in the tightly closed space S1b of the reaction vessel 1b can be acquired without removing the cover member 3b from the reaction vessel main body 2b.

The second embodiment described above was given in order to facilitate an understanding of the present invention, and does not limit the present invention in any way. Therefore, the various elements disclosed in the second embodiment should be construed as encompassing all design modifications, equivalents, etc., within the technological scope of the present invention.

When the reaction chamber 20b is closed off by covering the reaction vessel main body 2b with the cover member 3b, the inner peripheral surface of the third side plate 25b of the reaction vessel main body 2b does not have to be in direct contact with the outer peripheral surface of the second side plate 34b of the cover member 3b, and may instead have a member capable of maintaining a seal, such as an O-ring, interposed between these members. Similarly, when the nozzle tip fitting space 30b is closed by mounting the nozzle tip 4b in the nozzle tip fitting space 30b of the cover member 3b, the inner peripheral surface of the second side plate 34b of the cover member 3b does not have to be in direct contact with the outer peripheral surface of the second side plate 45b of the nozzle tip 4b, and may instead have a member capable of maintaining a seal, such as an O-ring, interposed between these members. Here, a gap, slit, or the like that communicates with the inside and outside of the reaction chamber 20b or of the nozzle tip fitting space 30b may be formed ahead of time in the O-ring or other member, so that any air inside the reaction chamber 20b or the nozzle tip fitting space 30b can be discharged to the outside when the reaction vessel main body 2b is covered with the cover member 3b or when the nozzle tip 4b is mounted in the nozzle tip fitting space 30b. Also, a gap, slit, or the like that communicates with the inside and outside of the reaction chamber 20b or of the nozzle tip fitting space 30b may be formed ahead of time in the inner peripheral surface of the third side plate 25b of the reaction vessel main body 2b or the outer peripheral surface of the second side plate 34b of the cover member 3b, or in the inner peripheral surface of the second side plate 34b of the cover member 3b or the outer peripheral surface of the second side plate 45b of the nozzle tip 4b.

### INDUSTRIAL APPLICABILITY

The present invention provides a reaction vessel, a reaction apparatus, and a method with which a reaction can be automated without requiring centrifugation when a reaction solution is held in a reaction chamber, the temperature of the reaction solution held in the reaction chamber can be rapidly controlled, the reaction can proceed even when just a tiny amount of reaction solution is held in the reaction chamber, and the reaction occurring in the reaction chamber can be monitored in real time (that is, instantly during the course of the reaction).

The present invention also provides a reaction vessel, a reaction apparatus, and a method with which, after a reaction has been conducted with the cover member covering the reaction vessel main body, the reaction product contained in the reaction solution inside the reaction vessel can be acquired without removing the cover member from the reaction vessel main body.

With the reaction vessel, reaction apparatus, and method of the present invention, a series of operations comprising the preparation of samples containing target nucleic acids (such as extraction of nucleic acids from cells), amplification of these target nucleic acids by PCR, monitoring of the progress of the PCR (such as whether or not the target nucleic acids have been amplified, or the amount of PCR amplification product), and acquiring PCR amplified fragments can be automated, making it possible for numerous specimens to be processed in parallel and efficiently.

## Claims

1. A reaction vessel comprising:
a reaction vessel main body equipped with a reaction chamber having an opening and capable of holding a reaction solution; and
a cover member capable of sealing the opening of the reaction chamber;
wherein the cover member and the reaction chamber have a contact surface that comes into contact with the reaction solution held in the reaction chamber in a state in which the cover member is mounted on the reaction vessel main body, and
the cover member is made of a light transmitting material so that light can pass from the reaction solution held in the reaction chamber, through the contact surface of the cover member, to the outside of the reaction vessel, or the reaction vessel main body is made of a light transmitting material so that light can pass from the reaction solution held in the reaction chamber, through the contact surface of the reaction chamber, to the outside of the reaction vessel.

2. The reaction vessel according to Claim 1, wherein the cover member is made of a light transmitting material so that light can pass from the outside of the reaction vessel, through the contact surface of the cover member, to the reaction solution held in the reaction chamber, or the reaction vessel main body is made of a light transmitting material so that light can pass from the outside of the reaction vessel, through the contact surface of the reaction chamber, to the reaction solution held in the reaction chamber.

3. The reaction vessel according to Claim 1 or 2, wherein all or part of the contact surface of the cover member is flat.

4. The reaction vessel according to Claim 1 or 2, wherein the contact surface of the cover member is the surface of the wall component of substantially uniform thickness that constitutes the cover member.

5. The reaction vessel according to Claim 1 or 2, wherein all or part of the contact surface of the reaction chamber is flat.

6. The reaction vessel according to Claim 1 or 2, wherein the contact surface of the reaction chamber is the surface of the wall component of substantially uniform thickness that constitutes the reaction vessel main body.

7. The reaction vessel according to Claim 1 or 2, wherein a tightly closed space is formed by the contact surface of the reaction chamber and the contact surface of the cover member when the cover member is mounted on the reaction vessel main body, and all or part of the reaction solution is held in the tightly closed space.

8. The reaction vessel according to Claim 7, wherein a surplus reaction solution holder capable of holding any surplus reaction solution that cannot be held in the tightly closed space is formed in the reaction chamber when the cover member is mounted on the reaction vessel main body.

9. The reaction vessel according to Claim 1 or 2, wherein the reaction chamber has an opposing surface opposite the contact surface of the cover member, and when the cover member is mounted on the reaction vessel main body, all or part of the reaction solution held in the reaction chamber is held in the form of a thin layer between the contact surface of the cover member and the opposing surface of the reaction chamber.

10. The reaction vessel according to Claim 9, wherein the opposing surface of the reaction chamber is the surface of the wall component of substantially uniform thickness that constitutes the reaction vessel main body.

11. The reaction vessel according to Claim 10, wherein the wall component having the opposing surface of the reaction chamber is made of a light transmitting material so that light can pass from the outside of the reaction vessel to the reaction solution held in the reaction chamber, and/or from the reaction solution held in the reaction chamber to the outside of the reaction vessel, through the opposing surface of the reaction chamber.

12. The reaction vessel according to Claim 9, wherein the reaction vessel main body has an abutting surface that defines the distance between the contact surface of the cover member and the opposing surface of the reaction chamber by abutting against the cover member.

13. The reaction vessel according to Claim 9, wherein the reaction chamber has an enveloping surface that envelops the reaction solution present between the contact surface of the cover member and the opposing surface of the reaction chamber, and
when the cover member is mounted on the reaction vessel main body, a tightly closed space is formed by the contact surface of the cover member, the opposing surface of the reaction chamber, and the enveloping surface of the reaction chamber, and all or part of the reaction solution is held in the form of a thin layer within the tightly closed space.

14. The reaction vessel according to Claim 13, wherein all or part of the enveloping surface of the reaction chamber is flat.

15. The reaction vessel according to Claim 14, wherein a lateral cross section of the enveloping surface of the reaction chamber is quadrangular.

16. The reaction vessel according to Claim 13, wherein the enveloping surface of the reaction chamber is the surface of the wall component of substantially uniform thickness that constitutes the reaction vessel main body.

17. The reaction vessel according to Claim 16, wherein the wall component having the enveloping surface of the reaction chamber is made of a light transmitting material so that light can pass from the outside of the reaction vessel to the reaction solution held in the reaction chamber, and/or from the reaction solution held in the reaction chamber to the outside of the reaction vessel, through the enveloping surface of the reaction chamber.

18. The reaction vessel according to Claim 7, wherein a nozzle tip fitting space, into which a nozzle tip mounted on a nozzle capable of the intake and discharge of a liquid can be fitted, is formed in the cover member, and a nozzle tip fitting hole leading to the nozzle tip fitting space is formed so as to allow the nozzle tip to be fitted into the nozzle tip fitting space while the cover member is mounted on the reaction vessel main body; and a through-hole communicating between the outside of the reaction vessel, the tightly closed space, and the nozzle tip fitting space can be formed in the reaction vessel main body and the cover member by a puncture needle provided on the outside of the reaction vessel while the cover member is mounted on the reaction vessel main body.

19. The reaction vessel according to Claim 13, wherein a nozzle tip fitting space, into which a nozzle tip mounted on a nozzle capable of the intake and discharge of a liquid can be fitted, is formed in the cover member, and a nozzle tip fitting hole leading to the nozzle tip fitting space is formed so as to allow the nozzle tip to be fitted into the nozzle tip fitting space while the cover member is mounted on the reaction vessel main body; and
a through-hole communicating between the outside of the reaction vessel, the tightly closed space, and the nozzle tip fitting space can be formed in the reaction vessel main body and the cover member by a puncture needle provided on the outside of the reaction vessel while the cover member is mounted on the reaction vessel main body.

20. The reaction vessel according to Claim 18 or 19, wherein the nozzle tip fitting space is formed so that the nozzle tip fitting space is closed off when the nozzle tip fitting hole is sealed.

21. The reaction vessel according to Claim 20, wherein the wall component of the cover member forming the nozzle tip fitting space has an inner peripheral surface capable of fitting snugly against the outer peripheral surface of the nozzle tip.

22. The reaction vessel according to Claim 21, wherein a convex component and/or a concave component capable of fitting with a concave component and/or a convex component provided on the outer peripheral surface of the nozzle tip is provided on the inner peripheral surface of the wall component of the cover member capable of snugly fitting against the outer peripheral surface of the nozzle tip.

23. The reaction vessel according to Claim 18 or 19, wherein the contact surface of the cover member is the surface of the wall component of the cover member forming the nozzle tip fitting space.

24. The reaction vessel according to Claim 18 or 19, wherein the contact surface of the cover member is the surface of the wall component of the cover member forming the deepest portion of the nozzle tip fitting space.

25. The reaction vessel according to Claim 24, wherein the wall component of the cover member forming the deepest portion of the nozzle tip fitting space is provided so as to oppose the wall component of the reaction vessel main body forming the deepest part of the tightly closed space.

26. The reaction vessel according to Claim 18 or 19, wherein the nozzle tip fitting space is formed such that the mounting direction of the nozzle tip with respect to the nozzle tip fitting space is perpendicular or substantially perpendicular to the surface on which the reaction vessel is placed.

27. The reaction vessel according to Claim 18 or 19, wherein the cover member has an outer peripheral surface capable of fitting snugly against the inner peripheral surface of the reaction chamber.

28. The reaction vessel according to Claim 27, wherein a concave component and/or a convex component is provided on the inner peripheral surface of the reaction chamber, and a convex component and/or a concave component capable of mating with the concave component and/or the convex component provided on the inner peripheral surface of the reaction chamber is provided on the outer peripheral surface of the cover member.

29. The reaction vessel according to Claim 1 or 2, being a reaction vessel for PCR.

30. A reaction apparatus, comprising the reaction vessel according to Claim 2, a temperature controller, a light source, and a fluorescent light detector,
wherein the temperature controller is attached to the cover member and/or the reaction vessel main body so that temperature of the reaction solution held in the reaction chamber can be controlled through the contact surface of the cover member and/or the contact surface of the reaction chamber,
the light source is provided so that the reaction solution held in the reaction chamber can be irradiated with light through the contact surface of the cover member and/or the contact surface of the reaction chamber, and
the fluorescent light detector is provided so that fluorescent light emitted from the reaction solution held in the reaction chamber can be detected through the contact surface of the cover member and/or the contact surface of the reaction chamber.

31. The reaction apparatus according to Claim 30, wherein the temperature controller is attached to the wall component of substantially uniform thickness that constitutes the cover member and that has the contact surface of the cover member, and/or the wall component of substantially uniform thickness that constitutes the reaction vessel main body and that has the contact surface of the reaction chamber.

32. The reaction apparatus according to Claim 30, wherein the reaction vessel is the reaction vessel according to Claim 13,
the temperature controller is attached to the cover member and/or the reaction vessel main body so that temperature of the reaction solution held in the reaction chamber can be controlled through the contact surface of the cover member and/or the opposing surface of the reaction chamber,
the light source is provided so that the reaction solution held in the reaction chamber can be irradiated with light through the enveloping surface of the reaction chamber, and
the fluorescent light detector is provided so that fluorescent light emitted from the reaction solution held in the reaction chamber can be detected through the enveloping surface of the reaction chamber.

33. The reaction apparatus according to Claim 32, wherein the temperature controller is attached to the wall component of substantially uniform thickness that constitutes the cover member and that has the contact surface of the cover member, and/or the wall component of substantially uniform thickness that constitutes the reaction vessel main body and that has the opposing surface of the reaction chamber.

34. The reaction apparatus according to Claim 32, further comprising a plurality of optical fibers disposed around the enveloping surface of the reaction chamber,
wherein the irradiation of the reaction solution with light from the light source and/or the detection of fluorescent light emitted from the reaction solution is accomplished by utilizing the optical fibers.

35. A reaction apparatus, comprising a reaction vessel installation part in which the reaction vessel according to Claim 18 or 19 is installed, a first temperature controller, a second temperature controller, a light source, and a fluorescent light detector,
wherein the first temperature controller is provided so that the temperature of the reaction solution held in the tightly closed space of the reaction vessel installed in the reaction vessel installation part can be controlled through the contact surface of the reaction chamber,
the second temperature controller is removably mounted in the nozzle tip fitting space of the cover member and provided so that the temperature of the reaction solution held in the tightly closed space of the reaction vessel installed in the reaction vessel installation part can be controlled through the contact surface of the cover member,
the light source is provided so that the reaction solution held in the tightly closed space of the reaction vessel installed in the reaction vessel installation part can be irradiated with light through the contact surface of the cover member and/or the contact surface of the reaction chamber, and
the fluorescent light detector is provided so that fluorescent light emitted from the reaction solution held in the tightly closed space of the reaction vessel installed in the reaction vessel installation part can be detected through the contact surface of the cover member and/or the contact surface of the reaction chamber.

36. The reaction apparatus according to Claim 35, wherein the reaction vessel is the reaction vessel according to Claim 19,
the first temperature controller is provided so that the temperature of the reaction solution held in the tightly closed space of the reaction vessel installed in the reaction vessel installation part can be controlled through the opposing surface of the reaction chamber,
the light source is provided so that the reaction solution held in the tightly closed space of the reaction vessel installed in the reaction vessel installation part can be irradiated with light through the enveloping surface of the reaction chamber, and
the fluorescent light detector is provided so that fluorescent light emitted from the reaction solution held in the tightly closed space of the reaction vessel installed in the reaction vessel installation part can be detected through the enveloping surface of the reaction chamber.

37. The reaction apparatus according to Claim 36, further comprising a plurality of optical fibers disposed around the enveloping surface of the reaction chamber,
wherein the irradiation of the reaction solution with light from the light source and/or the detection of fluorescent light emitted from the reaction solution is accomplished by utilizing the optical fibers.

38. The reaction apparatus according to Claim 35, further comprising a temperature controller mounting and removing part for mounting and removing the second temperature controller in the nozzle tip fitting space,
wherein the temperature controller mounting and removing part performs an operation for mounting the second temperature controller in the nozzle tip fitting space prior to the reaction, and operation for removing the second temperature controller from the nozzle tip fitting space after the reaction.

39. The reaction apparatus according to Claim 35, further comprising a puncture vessel installation part in which a puncture vessel is installed, a nozzle capable of the intake and discharge of a liquid, and a nozzle transfer part,
wherein the puncture vessel comprises a liquid holding space capable of holding a liquid, an opening that leads to the liquid holding space, and a puncture needle,
the liquid holding space is formed so that the reaction vessel can be accommodated in the liquid holding space through the opening,
the puncture needle is provided so as to protrude into the liquid holding space from the wall component of the puncture vessel forming the liquid holding space,
the nozzle transfer part performs an operation for fitting the nozzle tip mounted on the nozzle in the nozzle tip fitting space of the reaction vessel installed in the reaction vessel installation part, operation for transferring the reaction vessel with the mounted nozzle tip fitted thereinto to the puncture vessel installation part, and operation for accommodating the reaction vessel in the liquid holding space of the puncture vessel installed puncture vessel installation part, and for forming in the cover member and the reaction vessel main body, by means of the puncture needle provided in the puncture vessel, a through-hole that communicates with the nozzle tip fitting space, the tightly closed space of the reaction vessel, and the liquid holding space of the puncture vessel, and
the nozzle performs an operation for extracting the reaction solution held in the tightly closed space of the reaction vessel into the liquid held in the liquid holding space of the puncture vessel, by the intake and discharge of the liquid through the through-hole.

40. The reaction apparatus according to Claim 30 or 35, being a reaction apparatus for PCR.

41. A method, comprising the steps of:
(a) bringing the reaction solution held in the reaction chamber into contact with a contact member;
(b) controlling the temperature of the reaction solution through the contact surface between the reaction solution and the reaction chamber and/or the contact surface between the reaction solution and the contact member;
(c) irradiating the reaction solution with light through the contact surface between the reaction solution and the reaction chamber and/or the contact surface between the reaction solution and the contact member; and
(d) detecting fluorescent light emitted from the reaction solution through the contact surface between the reaction solution and the reaction chamber and/or the contact surface between the reaction solution and the contact member.

42. The method according to Claim 41, wherein the contact surface of the reaction chamber utilized for controlling the temperature of the reaction solution is different from the contact surface of the reaction chamber utilized for irradiating the reaction solution with light and/or the contact surface of the reaction chamber utilized for detecting fluorescent light from the reaction solution.

43. The method according to Claim 41, wherein a nozzle tip fitting space, into which a nozzle tip mounted on a nozzle capable of the intake and discharge of a liquid can be fitted, is formed in the contact member, and further comprising the steps of:
(e) forming a through-hole that communicates with the outside of the reaction chamber, the inside of the reaction chamber, and the nozzle tip fitting space by means of a puncture needle provided to the outside of the reaction chamber after completion of a reaction in the reaction chamber;
(f) mounting the nozzle tip mounted to the nozzle in the nozzle tip fitting space;
(g) bringing the outside of the reaction chamber into contact with a liquid; and
(h) extracting the reaction solution held in the reaction chamber into the liquid by operating the nozzle and performing the intake and discharge of the liquid through the through-hole.

44. The method according to Claim 41, wherein the reaction occurring in the reaction chamber is a PCR.
